# EUROPEAN PATENT APPLICATION

(11) **EP 4 425 451 A1**
(43) Date of publication of application: **04.09.2024**
(21) Application number: 23807047.8
(22) Date of filing: 18.05.2023
(51) Int. Cl.: G06V 30/12

(54) **TEXT RECOGNITION METHOD AND RELATED APPARATUS**

(30) Priority: 20.05.2022 CN 202210552369
(71) Applicant: Huawei Technologies Co., Ltd., Shenzhen, Guangdong 518129 (CN)
(72) Inventor: HUANG, Fuwei, Shenzhen, Guangdong 518129 (CN)
(74) Representative: Isarpatent
(86) International application number: PCT/CN2023/095124
(87) International publication number: WO 2023/222097

(57) **Abstract**

This application provides a text recognition method and a related apparatus. An electronic device obtains a text, and recognizes a type of one or more error correction symbols in the text, a modification location of the one or more error correction symbols in the text, and modification content of the one or more error correction symbols. The electronic device modifies the text based on the type of the one or more error correction symbols, the modification location of the one or more error correction symbols in the text, and the modification content of the one or more error correction symbols, to obtain a modified text. The modified text is a text that is corrected based on the error correction symbol but does not include the error correction symbol. In this way, the electronic device can output a recognition result of a text sequence in a correct order, thereby improving accuracy of text content recognition.

## Description

This application claims priority to Chinese Patent Application No. 202210552369.8, filed with the China National Intellectual Property Administration on May 20, 2022 and entitled "TEXT RECOGNITION METHOD AND RELATED APPARATUS", which is incorporated herein by reference in its entirety.

### TECHNICAL FIELD

This application relates to the field of image recognition technologies, and in particular, to a text recognition method and a related apparatus.

### BACKGROUND

Text recognition is an important topic in the field of computer vision, and is also important research content of optical character recognition (OCR, optical character recognition). OCR is widely applied to office automation systems in various application scenarios, such as fields of factory automation, online education, and document recognition.

However, OCR is still a challenging task due to different text appearances and computing efficiency requirements. In particular, in a text recognition task including an error correction symbol, how to correctly recognize such a text and output a recognition result of a text sequence in a correct order is to be further researched.

### SUMMARY

This application provides a text recognition method and a related apparatus, so that an electronic device can accurately recognize an error correction symbol in a text, modify the text based on the error correction symbol, and output modified text content, to improve accuracy of text content recognition.

According to a first aspect, this application provides a text recognition method. The method includes: An electronic device recognizes a first text image, where the first text image includes first text information and a first error correction symbol, and the text information includes a plurality of characters; the electronic device recognizes that a modification type of the first error correction symbol in the first text image is a first type, and determines a first display location of the first error correction symbol in the first text image; the electronic device determines modification content of the first error correction symbol based on the first display location and the modification type of the first error correction symbol; the electronic device determines a modification location of the first error correction symbol in the first text information based on the first display location; and the electronic device performs the first type of modification on the first text information based on the modification content of the first error correction symbol and the modification location of the first error correction symbol in the first text information, to obtain second text information.

The modification content of the first error correction symbol includes but is not limited to: adding content, deleting content, transposing content, and the like.

The first display location of the first error correction symbol in the first text image may be understood as a boundary of the first error correction symbol.

According to the text recognition method provided in the first aspect, the electronic device can accurately recognize an error correction symbol in a text, modify the text based on the error correction symbol, and output modified text content, to improve accuracy of text content recognition.

With reference to the first aspect, in a possible implementation, that the electronic device determines modification content of the first error correction symbol based on the first display location and the modification type of the first error correction symbol specifically includes: The electronic device determines, based on the first display location and the modification type of the first error correction symbol, a first text line and a second text line in which the modification content of the first error correction symbol is located. That the electronic device performs the first type of modification on the first text information based on the modification content of the first error correction symbol and the modification location of the first error correction symbol in the first text information, to obtain second text information specifically includes: The electronic device aggregates the first text line and the second text line into a first text paragraph when it is determined that the first text line and the second text line belong to a same paragraph; and the electronic device performs the first type of modification on the first text information based on the first text paragraph and the modification location of the first error correction symbol in the first text information, to obtain the second text information.

In this way, the electronic device can aggregate different text lines belonging to a same paragraph into one paragraph, and modify the text. This improves accuracy of modifying the text based on the error correction symbol.

With reference to the first aspect, in a possible implementation, the first text line is above the second text line. That the electronic device aggregates the first text line and the second text line into a first text paragraph specifically includes: The electronic device splices the second text line at a tail of the first text line to obtain the first text paragraph. That is, the first text line and the second text line are aggregated into the first text paragraph, and the electronic device connects a header of the second text line to the tail of the first text line. Therefore, different text lines belonging to a same paragraph are aggregated into one paragraph.

With reference to the first aspect, in a possible implementation, the method further includes: When the first text line and the second text line do not belong to a same paragraph, the electronic device uses the first text line as the first text paragraph, and uses the second text line as a second text paragraph; and the electronic device performs the first type of modification on the first text information based on the first text paragraph, the second text paragraph, and the modification location of the first error correction symbol in the first text information, to obtain the second text information.

In this way, the electronic device can divide different text lines that do not belong to a same paragraph into different paragraphs, and modify the text based on the different paragraphs. This improves accuracy of modifying the text based on the error correction symbol.

With reference to the first aspect, in a possible implementation, the type of the first error correction symbol is any one of the following: a deletion symbol, a restoration symbol, a transposition symbol, a correction symbol, an addition symbol, an emphasis symbol, a prompt symbol, a dispatch symbol, a c-paragraph symbol, a paragraph combination symbol, an indentation symbol, and a forward symbol.

With reference to the first aspect, in a possible implementation, before that the electronic device determines modification content of the first error correction symbol based on the first display location and the modification type of the first error correction symbol, the method further includes: The electronic device determines a second display location of each character in the first text information on the first text image. That the electronic device determines a modification location of the first error correction symbol in the first text information based on the first display location specifically includes: The electronic device determines the modification location of the first error correction symbol in the first text information based on the first display location and the second display location.

The second display location of each character in the first text information on the first text image may be understood as a boundary of each character in the first text information, for example, a left boundary of the character and a right boundary of the character.

The electronic device determines the second display location of each character in the first text information on the first text image, to accurately determine the modification location of the first error correction symbol in the text. This improves accuracy of determining the modification location of the first error correction symbol in the first text information.

In another possible implementation, the electronic device may not recognize the boundary of each character in the first text information, and needs only to determine a boundary of each character in a specific region in which an image of the first error correction symbol is located. The specific region in which the image of the first error correction symbol is located may be the same as a region in which the image of the first error correction symbol is located, or may be larger than a region in which the image of the first error correction symbol is located. This is not limited in this embodiment of this application. In this way, the electronic device does not need to recognize the boundary of each character in the first text information, thereby reducing a calculation amount of the electronic device.

With reference to the first aspect, in a possible implementation, that the electronic device determines a second display location of each character in the first text information on the first text image specifically include: The electronic device erases the first error correction symbol from the first text image, to obtain a second text image; the electronic device recognizes, from the second text image, a third display location of each character in the first text information on the second text image; and the electronic device determines, based on the third display location of each character in the first text information on the second text image, the second display location of each character in the first text information on the first text image.

In this way, the electronic device determines the boundary of each character in the first text information based on the text that does not include the error correction symbol, thereby avoiding the electronic device from recognizing the error correction symbol as a character, and thereby improving accuracy of character boundary recognition.

With reference to the first aspect, in a possible implementation, that the electronic device recognizes, from the second text image, a third display location of each character in the first text information on the second text image specifically includes: The electronic device recognizes a quantity of characters and character content in the second text image; and the electronic device recognizes the third display location of each character in the first text information on the second text image based on the quantity of characters and the character content in the second text image.

In this way, the quantity of characters in the text line is considered, the boundary of each character in the first text information is determined based on both the quantity of characters and the character content, thereby improving accuracy of character boundary recognition.

With reference to the first aspect, in a possible implementation, when the first error correction symbol is any one of the addition symbol, the correction symbol, the c-paragraph symbol, the dispatch symbol, and the paragraph combination symbol, that the electronic device performs the first type of modification on the first text information based on the modification content of the first error correction symbol and the modification location of the first error correction symbol in the first text information, to obtain second text information specifically includes:

The electronic device adds first addition content at a first addition location based on the first addition content of the addition symbol and the first addition location of the addition symbol in the first text information, to obtain the second text information;
the electronic device deletes first modification content from a first modification location based on first correction content and the first modification content of the correction symbol, and the first modification location of the correction symbol in the first text information, and displays the first modification content at the first modification location, to obtain the second text information;
the electronic device adds first line break content at a first line break location based on the first line break content and the first line break location of the c-paragraph symbol in the first text information, to obtain the second text information, where the first line break content is determined based on the c-paragraph symbol;
the electronic device adds first dispatch content at a first dispatch location based on the first dispatch content and the first dispatch location of the dispatch symbol in the first text information, to obtain the second text information, where the first dispatch content is determined based on the dispatch symbol; or
the electronic device adds first paragraph combination content at a first paragraph combination location based on the first paragraph combination content and the first paragraph combination location of the paragraph combination symbol in the first text information, and deletes a text line in which the first paragraph combination content is located, to obtain the second text information, where the first paragraph combination content is determined based on the paragraph combination symbol. That is, for different types of error correction symbols, specific modification manners are different.

With reference to the first aspect, in a possible implementation, when the first error correction symbol is any one of the restoration symbol, the deletion symbol, the transposition symbol, the emphasis symbol, the prompt symbol, the indentation symbol, and the forward symbol, that the electronic device performs the first type of modification on the first text information based on the modification content of the first error correction symbol and the modification location of the first error correction symbol in the first text information, to obtain second text information specifically includes:

The electronic device adds first restoration content at a first restoration location based on the first restoration content and the first restoration location of the restoration symbol in the first text information, to obtain the second text information, where the first restoration content is determined based on the restoration symbol;
the electronic device deletes first deletion content from a first modification location based on the first deletion content and the first modification location of the deletion symbol in the first text information, to obtain the second text information, where the first deletion content is determined based on the deletion symbol;
the electronic device moves and displays second transposition content at a first transposition location and first transposition content at a second transposition location based on the first transposition content and the second transposition content of the transposition symbol, and the first transposition location and the second transposition location of the transposition symbol in the first text information, to obtain the second text information;
the electronic device highlights first highlighting content in a first manner based on the first highlighting content and a first display location of the emphasis symbol or the prompt symbol in the first text information, to obtain the second text information, where the first highlighting content is determined based on the emphasis symbol or the prompt symbol, and the first manner includes but is not limited to any one or more of the following: bold display, special color display, and shadow display;
the electronic device moves a third text line backward by two cells based on the third text line, a first indentation location of the indentation symbol in the first text information, and the first indentation location, to obtain the second text information, where the third text line is determined based on the indentation symbol; or
the electronic device moves a fourth text line forward by two cells based on the fourth text line, a first forward location of the forward symbol in the first text information, and the first forward location, to obtain the second text information, where the fourth text line is determined based on the forward symbol. That is, for different types of error correction symbols, specific modification manners are different.

According to a second aspect, this application provides an electronic device. The electronic device includes one or more processors and one or more memories. The one or more memories are coupled to the one or more processors, the one or more memories are configured to store computer program code, the computer program code includes computer instructions, and the one or more processors invoke the computer instructions to enable the electronic device to perform the text recognition method according to any one of the implementations of any one of the foregoing aspects.

According to a third aspect, this application provides a computer-readable storage medium. The computer-readable storage medium stores instructions, and when the instructions are run on an electronic device, the electronic device is enabled to perform the text recognition method according to any one of the implementations of any one of the foregoing aspects.

According to a fourth aspect, this application provides a computer program product. When the computer program product is executed by an electronic device, the electronic device is enabled to perform the text recognition method according to any one of the implementations of any one of the foregoing aspects.

For beneficial effect of the second aspect to the fourth aspect, refer to descriptions of beneficial effect of the first aspect. Details are not described herein again in this application.

### BRIEF DESCRIPTION OF DRAWINGS

FIG. 1A to FIG. 1L are diagrams of a group of UIs according to embodiments of this application;
FIG. 2 is a diagram of a structure of an electronic device 100 according to an embodiment of this application;
FIG. 3 is a diagram of a software structure of an electronic device 100 according to an embodiment of this application;
FIG. 4A is a diagram of functional modules for a text recognition method according to an embodiment of this application;
FIG. 4B is a diagram of a text according to an embodiment of this application;
FIG. 5 is a diagram of a correspondence between images of some error correction symbols and names of the error correction symbols according to an embodiment of this application;
FIG. 6 is a diagram of a text recognized by an electronic device 100 and an error correction symbol included in the text according to an embodiment of this application;
FIG. 7 is a diagram of a text recognized by an electronic device 100 and an emphasis symbol included in the text according to an embodiment of this application;
FIG. 8 is a diagram of pixel division performed by an electronic device 100 based on a quantity of characters in a text according to an embodiment of this application;
FIG. 9 is a diagram of obtaining a boundary by an electronic device 100 for each character in text aggregation according to an embodiment of this application;
FIG. 10A to FIG. 10G are diagrams of another group of UIs according to embodiments of this application;
FIG. 11A to FIG. 11E are diagrams of still another group of UIs according to embodiments of this application; and
FIG. 12 is a schematic flowchart of a text recognition method according to an embodiment of this application.

### DESCRIPTION OF EMBODIMENTS

Technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

An error correction symbol is usually used to modify incorrect text content in a text. The following describes functions and display forms of several common error correction symbols.

### 1. Deletion symbol

The deletion symbol is used to delete a letter, a word, a phrase, a long sentence, a paragraph, a punctuation mark, and the like from text.

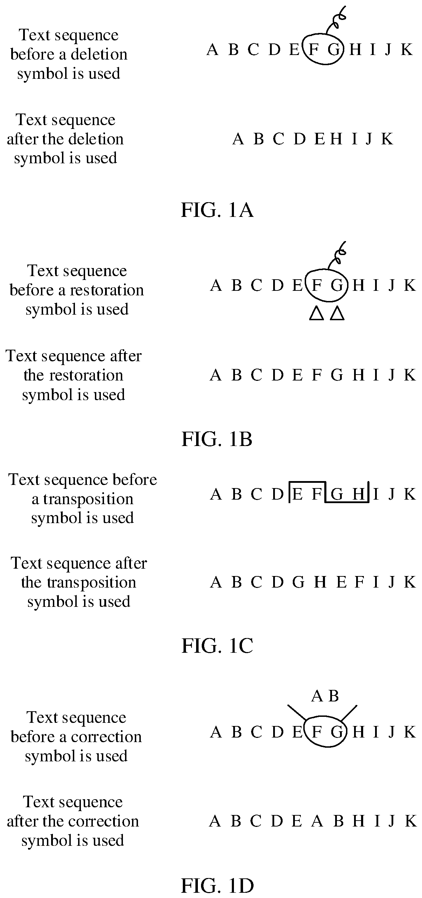

FIG. 1A shows a display form of the deletion symbol.

As shown in FIG. 1A, a text sequence before the deletion symbol is used is "ABCDEFGHIJK", and characters "FG" in the text sequence are deleted by using the deletion symbol. In this case, the text sequence after the deletion symbol is used is changed to "ABCDEHIJK".

### 2. Restoration symbol

The restoration symbol may also be referred to as a reservation mark. The restoration symbol is used to restore a deleted letter, word, phrase, long sentence, paragraph, punctuation mark, and the like. If a letter and a punctuation mark need to be restored, the restoration symbol needs to be marked below the letter and the punctuation mark. If a word, a phrase, a long sentence, a paragraph, and the like need to be restored, the restoration symbol needs to be marked below each character in the word, the phrase, the long sentence, and the paragraph.

FIG. 1B shows a display form of the restoration symbol.

As shown in FIG. 1B, a text sequence before the restoration symbol is used is "ABCDEHIJK", that is, characters "FG" in the text sequence are deleted by using the deletion symbol. In this case, the restoration symbol can be used to restore the characters "FG" deleted by using the deletion symbol, and the text sequence after the restoration symbol is used is changed to "ABCDEFGHIJK".

### 3. Transposition symbol

The transposition symbol is used to exchange locations of adjacent letters, adjacent words, adjacent phrases, and adjacent long sentences in a text sequence.

FIG. 1C shows a display form of the transposition symbol.

As shown in FIG. 1C, a text sequence before the transposition symbol is used is "ABCDEFGHIJK". A location of a character in the text sequence may be exchanged by using the transposition symbol. For example, a location of characters "EF" and a location of characters "GH" in the text sequence are exchanged, and the text sequence after the transposition symbol is used is changed to "ABCDGHEFIJK".

### 4. Correction symbol

The correction symbol is used to modify an incorrect letter, word, phrase, long sentence, paragraph, punctuation mark, and the like in a text sequence to a correct letter, word, phrase, long sentence, paragraph, and punctuation mark.

FIG. 1D shows a display form of the correction symbol.

As shown in FIG. 1D, a text sequence before the correction symbol is used is "ABCDEFGHIJK". An incorrect letter, word, phrase, long sentence, paragraph, punctuation mark, and the like in the text sequence may be modified to a correct letter, word, phrase, long sentence, paragraph, and punctuation mark by using the correction symbol. For example, characters "FG" in the text sequence are modified to characters "AB", and the text sequence after the correction symbol is used is changed to "ABCDEABHIJK".

### 5. Addition symbol

The addition symbol is used to add a new letter, word, phrase, long sentence, paragraph, punctuation mark, and the like to a text sequence.

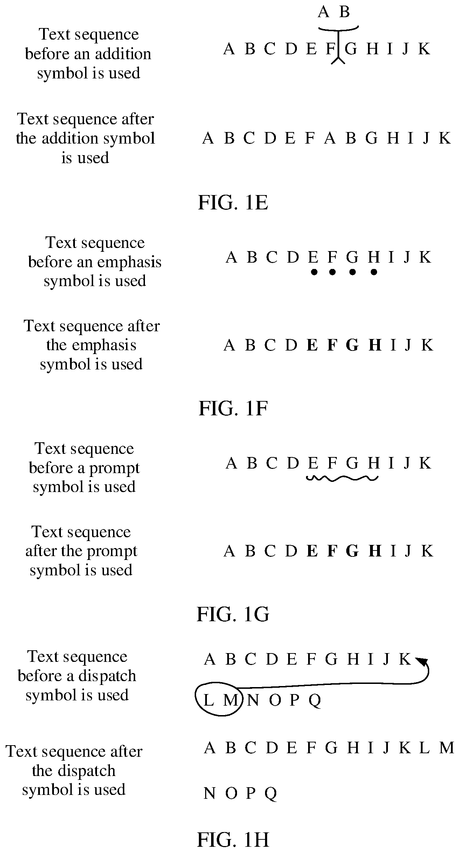

FIG. 1E shows a display form of the addition symbol.

As shown in FIG. 1E, a text sequence before the addition symbol is used is "ABCDEFGHIJK". The addition symbol can be used to add a new letter, word, phrase, long sentence, paragraph, punctuation mark, and the like to the text sequence. For example, if new characters "AB" are added to the text sequence, the text sequence after the addition symbol is used is changed to "ABCDEFABGHIJK".

### 6. Emphasis symbol

The emphasis symbol is used to mark a beautiful or key letter, word, phrase, long sentence, paragraph, and the like in a text sequence.

FIG. 1F shows a display form of the emphasis symbol.

As shown in FIG. 1F, a text sequence before the emphasis symbol is used is "ABCDEFGHIJK". The emphasis symbol can be used to mark a beautiful or key letter, word, phrase, long sentence, paragraph, and the like in the text sequence. For example, characters "EFGH" in the text sequence are marked with the emphasis symbol.

### 7. Prompt symbol

The prompt symbol is used to mark a problematic letter, word, phrase, long sentence, paragraph, punctuation mark, and the like in a text sequence, to prompt an author to analyze and correct the problematic letter, word, phrase, long sentence, paragraph, punctuation mark, and the like marked by the prompt symbol.

FIG. 1G shows a display form of the prompt symbol.

As shown in FIG. 1G, a text sequence before the prompt symbol is used is "ABCDEFGHIJK". The prompt symbol can be used to mark a problematic letter, word, phrase, long sentence, paragraph, punctuation mark, and the like in the text sequence. For example, characters "EFGH" in the text sequence are marked with the prompt symbol, to prompt the author to analyze and correct the characters "EFGH" in the text sequence marked with the prompt symbol.

### 8. Dispatch symbol

The dispatch symbol is used to move a letter, a word, a phrase, a long sentence, a paragraph, a punctuation mark, and the like at a long distance (or across lines).

FIG. 1H shows a display form of the dispatch symbol.

As shown in FIG. 1H, there are two lines of text sequence before the dispatch symbol is used. The first line of text sequence is "ABCDEFGHIJK", and the second line of text sequence is "LMNOPQ". The dispatch symbol can be used to move some characters in the second line of text sequence to the first line of text sequence. For example, some characters "LM" in the second line of text sequence is moved to the first line of text sequence. The first line of text sequence after the dispatch symbol is used is changed to "ABCDEFGHIJKLM", and the second line of text sequence after the dispatch symbol is used is changed to "NOPQ".

### 9. c-paragraph symbol

The c-paragraph symbol is used to divide a line of text sequence into two lines, or to start another paragraph.

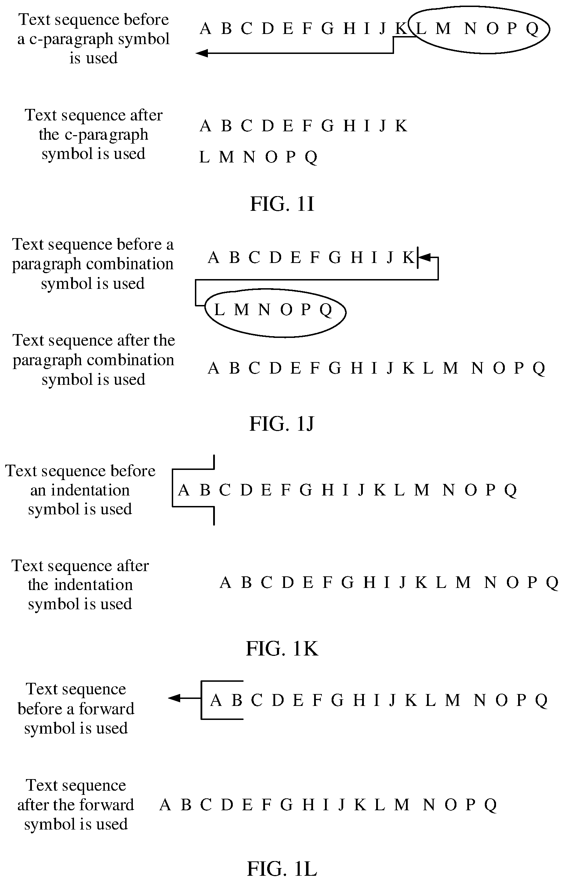

FIG. 1I shows a display form of the c-paragraph symbol.

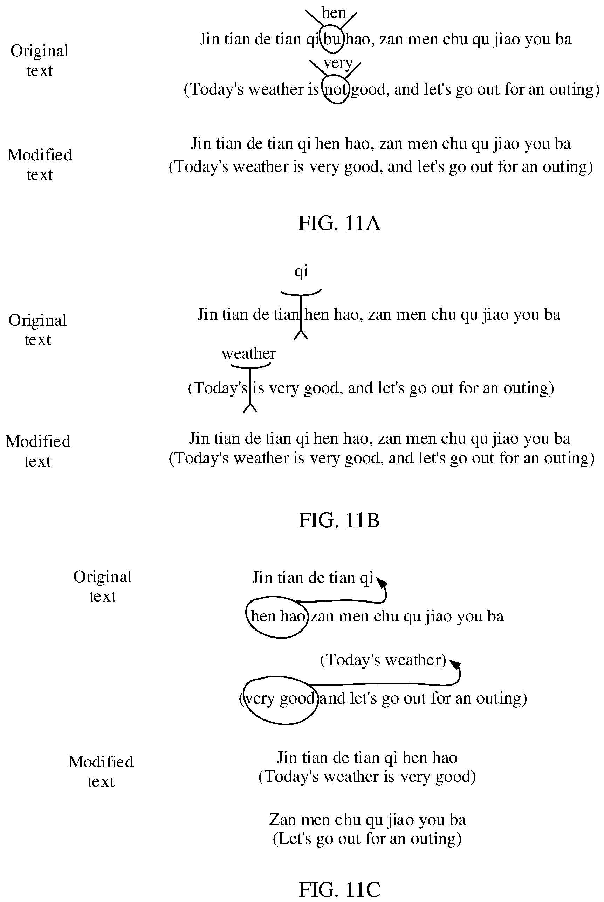

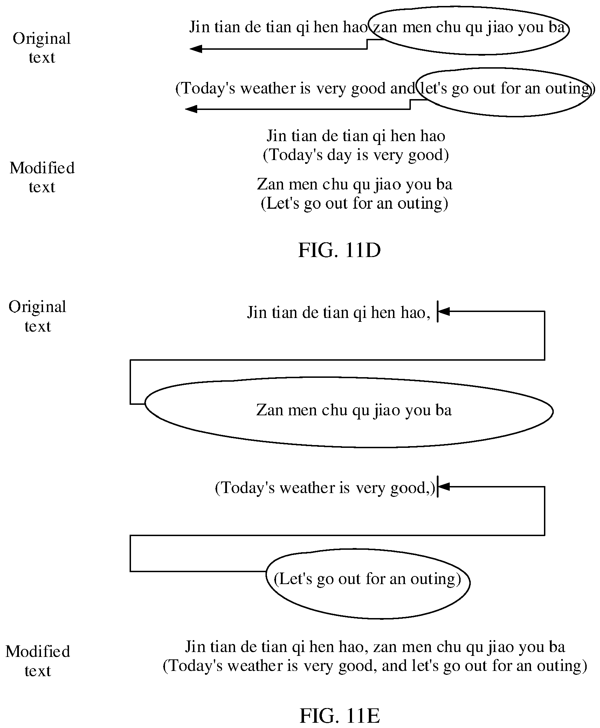

As shown in FIG. 11, there is one line of text sequence before the c-paragraph symbol is used. The text sequence is "ABCDEFGHIJKLMNOPQ". The c-paragraph symbol can be used to convert one line of text sequence into two lines of text sequence. For example, characters "LMNOPQ" in the text sequence are placed on a new line by using the c-paragraph symbol.

The first line of text sequence after the c-paragraph symbol is used is changed to "ABCDEFGHIJK", and the second line of text sequence after the c-paragraph symbol is used is changed to "LMNOPQ".

### 10. Paragraph combination symbol

The paragraph combination symbol is used to combine two lines of text sequence into one line, and indicates that the original two lines of text sequence are not be segmented.

FIG. 1J shows a display form of the paragraph combination symbol.

As shown in FIG. 1J, there are two lines of text sequence before the paragraph combination symbol is used. The first line of text sequence is "ABCDEFGHIJK", and the second line of text sequence is "LMNOPQ". The paragraph combination symbol is used to combine the second line of text sequence with the first line of text sequence, and place the second line of text sequence after the first line of text sequence. The text sequence after the paragraph combination symbol is used is changed to "ABCDEFGHIJKLMNOPQ".

### 11. Indentation symbol

The indentation symbol is used to indent a full-out text in a line of text sequence by two cells, that is, to indicate that the line of text sequence starts another paragraph, and each character in the text sequence is successively moved backward by two cells.

FIG. 1K shows a display form of the indentation symbol.

As shown in FIG. 1K, a text sequence before the indentation symbol is used is "ABCDEFGHIJKLMNOPQ", and there is no space (that is, full out) on the full-out text in the line of text sequence. The indentation symbol can be used to indent the full-out text in the line of text sequence by two cells. That is, each character in the line of text sequence is moved backward by two cells, so that the line of text sequence becomes a separate paragraph.

### 12. Forward symbol

The forward symbol is used to move a full-out text in a line of text sequence forward, that is, to indicate that the line of text sequence is not a separate paragraph, and each character in the line of text sequence is successively moved forward.

FIG. 1L shows a display form of the forward symbol.

As shown in FIG. 1L, a text sequence before the forward symbol is used is "ABCDEFGHIJKLMNOPQ", and there is no space (that is, full out) on the full-out text in the line of text sequence. However, the text sequence is not a separate paragraph. In this case, the forward symbol can be used to move the full-out text in the line of text sequence forward, so that there is no space on the full-out text in the text sequence. That is, each character in the line of text sequence is moved forward, so that the line of text sequence does not become a separate paragraph.

In addition to the foregoing 12 error correction symbols, in another embodiment, more other error correction symbols may be included. This is not limited in this embodiment of this application.

Currently, there are usually the following two OCR methods. One is to detect a text line first, and then recognize content of the text line. The other is to simultaneously complete text line detection and text line content recognition. Text line detection is to determine a boundary of a text sequence, that is, to determine a region in which a text image is located. Text line content recognition is to determine each character in the text image to obtain a recognized text sequence.

However, the current OCR method has the following disadvantages:

Disadvantage 1: When the text line includes an error correction symbol, the error correction symbol may be recognized and output as a common symbol. However, an output result expected by a user is a recognition result after the error correction symbol is filtered. For example, if the text line includes the addition symbol shown in FIG. 1E, the text sequence shown in FIG. 1E after the addition symbol is used is recognized as "A BBCDEF person GHIJK", that is, the addition symbol may be recognized as a character "person", and an incorrect recognition result of the text sequence is obtained.

Disadvantage 2: When the text line includes an error correction symbol, text content cannot be correctly output in a correct order. For example, if the text line includes the addition symbol shown in FIG. 1E, the text usually includes an original text and an inserted text. In a current recognition result, two lines of text are incorrectly spliced from top to bottom to obtain a text sequence "ABABCDEFGHIJK", instead of obtaining a text sequence after the addition symbol is used, that is, the obtained result is not a line of text sequence obtained after the inserted text is inserted into the original text, for example, a text sequence "ABCDEFABGHIJK".

Disadvantage 3: When the text line includes an error correction symbol, character segmentation accuracy is reduced. As a result, a character segmentation error occurs.

Based on the foregoing analysis, an embodiment of this application provides a text recognition method. An electronic device obtains a text, and recognizes a type of one or more error correction symbols in the text, a modification location of the one or more error correction symbols in the text, and modification content of the one or more error correction symbols. The electronic device modifies the text based on the type of the one or more error correction symbols, the modification location of the one or more error correction symbols in the text, and the modification content of the one or more error correction symbols, to obtain a modified text. The modified text is a text that is corrected based on the error correction symbol but does not include the error correction symbol. In this way, the electronic device can output a result expected by the user.

It should be noted that, different error correction symbols have different modification operations on the text. How to modify the text by using different error correction symbols is described in detail in a subsequent embodiment. Details are not described herein in this embodiment of this application.

In one aspect, the electronic device can correctly recognize the type of the error correction symbol in the text, and automatically modify the text based on the type of the error correction symbol. In another aspect, after the electronic device recognizes the type of the error correction symbol in the text, the electronic device can output the modified text in a correct order.

The text recognition method provided in this embodiment of this application may be applied to a test paper scanning scenario, a memo handwriting scenario, a text input scenario of an app supporting handwriting, or a text input scenario of a display supporting handwriting in a conference room. In these scenarios, the text may include one or more error correction symbols. The electronic device may obtain the text based on the text recognition method provided in this application, recognize the one or more error correction symbols in the text, modify the text based on the one or more error correction symbols, obtain a modified text by using the one or more error correction symbols, and output a modified text sequence. That is, the electronic device may output a recognition result of the text sequence in a correct order, thereby bringing more convenient and accurate experience to the user.

The electronic device 100 may be a large-screen device, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and/or the like. Alternatively, the electronic device 100 may be a server. A specific type of the electronic device is not limited in the embodiment of this application.

In the following embodiments of this application, an example in which the electronic device 100 is a mobile phone is used for description.

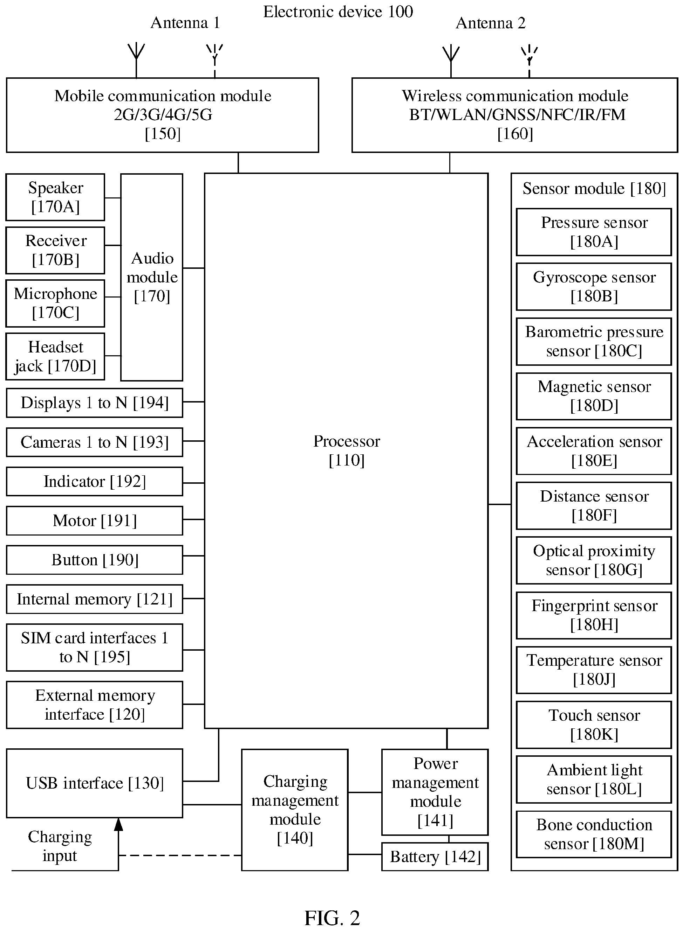

FIG. 2 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPIinterface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The internal memory 121 may include one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM generally referred to as DDR5 SDRAM), or the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of the cell; or may be classified into a universal flash storage (English: universal flash storage, UFS), an embedded multimedia card (embedded multi media Card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable programs, the data of the users and the applications, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined by the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover by using the magnetic sensor 180D. Further, a feature such as automatic unlocking of the flip cover is set based on a detected opening or closing state of the cover or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by using the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to avoid the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different regions of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

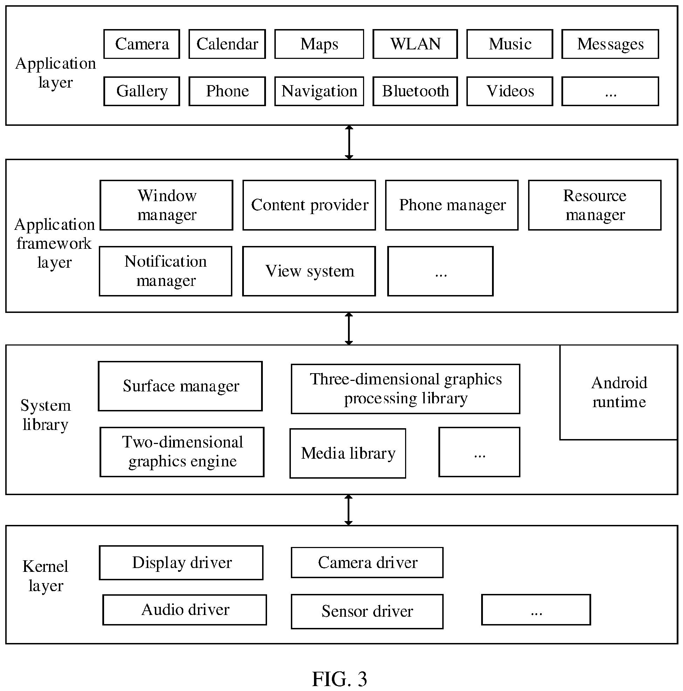

FIG. 3 is a block diagram of the software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is produced, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

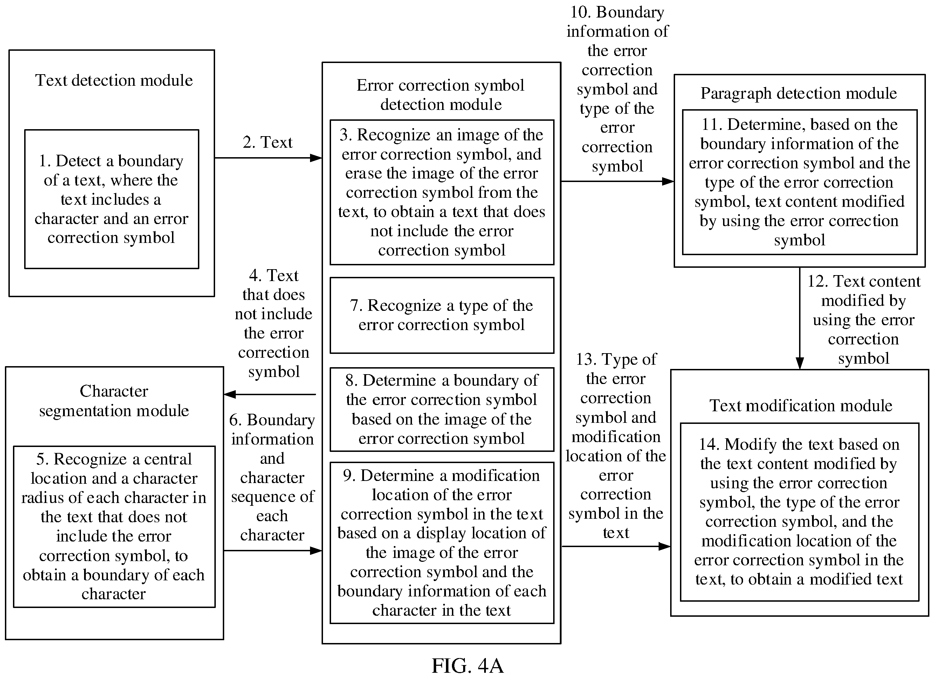

FIG. 4A shows an example of a diagram of functional modules of an electronic device 100 for implementing a text recognition method according to an embodiment of this application.

The functional modules include but are not limited to: a text detection module, an error correction symbol detection module, a character segmentation module, a paragraph detection module, and a text modification module.

The text detection module is configured to obtain a text, where the text includes a character and an error correction symbol. The error correction symbol includes but is not limited to: a deletion symbol, a restoration symbol, a transposition symbol, a correction symbol, an addition symbol, an emphasis symbol, a prompt symbol, a dispatch symbol, a c-paragraph symbol, a paragraph combination symbol, an indentation symbol, a forward symbol, or the like. The character includes but is not limited to a text, a letter, a punctuation mark, and a digit. The text detection module is further configured to detect a boundary of the text. The text may include a plurality of text lines. The text detection module may recognize a boundary of each text line. The boundary of each text line includes a left boundary, a right boundary, an upper boundary, a lower boundary, and the like of each text line.

After the text detection module detects the boundary of the text, the text detection module is further configured to send the recognized text to the error correction symbol detection module.

The error correction symbol detection module is configured to receive the recognized text sent by the text detection module. First, the error correction symbol detection module is configured to recognize an image of an error correction symbol in the text, and erase the image of the error correction symbol from the text, to obtain a text that does not include the error correction symbol. Then, the error correction symbol detection module sends the text that does not include the error correction symbol to the character segmentation module.

The character segmentation module is configured to receive the text that does not include the error correction symbol and that is sent by the error correction symbol detection module, recognize a character sequence in the text that does not include the error correction symbol, recognize a central point location and a character radius of each character in the text that does not include the error correction symbol, and determine a boundary of each character based on the central point location and the character radius of each character. In this way, the character segmentation module recognizes, based on the text that does not include the error correction symbol, the character sequence in the text that does not include the error correction symbol and determines the boundary of each character, to avoid a case in which the text includes the error correction symbol and the error correction symbol is incorrectly recognized as a character, thereby improving accuracy of character recognition.

Optionally, the character segmentation module may determine the boundary of each character based on a quantity of characters and character content of each text line in the text. In this way, accuracy of dividing the boundary of each character by the character segmentation module can be improved. How the character segmentation module determines the boundary of each character based on the quantity of characters and the character content of each text line in the text is described in detail in a subsequent embodiment. Details are not described in this embodiment of this application.

After the character segmentation module recognizes the character sequence in the text that does not include the error correction symbol and determines the boundary of each character in the text that does not include the error correction symbol, the character segmentation module sends boundary information of each character and the character sequence to the error correction symbol detection module.

The error correction symbol detection module is further configured to receive the boundary information of each character and the character sequence received by the character segmentation module.

The error correction symbol detection module is further configured to determine the type of the error correction symbol based on the image of the error correction symbol.

The error correction symbol detection module is further configured to determine a boundary of the error correction symbol based on the image of the error correction symbol. The boundary of the error correction symbol is used to determine text content modified by using the error correction symbol. The boundary of the error correction symbol includes an upper boundary of the error correction symbol, a lower boundary of the error correction symbol, a left boundary of the error correction symbol, and a right boundary of the error correction symbol.

In some embodiments, the boundary of the error correction symbol may also be referred to as a display location of the error correction symbol in the text.

After receiving the boundary information of each character, the error correction symbol detection module is further configured to determine a modification location of the error correction symbol in the text based on the display location of the error correction symbol in the text and the boundary information of each character. The modification location of the error correction symbol in the text may be understood as that a character modified by using the error correction symbol is located between which characters. In other words, the location of the error correction symbol in the text is used to determine a location of the text modified by using the error correction symbol.

In some embodiments, the boundary of the character may also be referred to as a display location of the character in the text.

Optionally, in some embodiments, the error correction symbol detection module may first determine the display location of the error correction symbol in the text based on the image of the error correction symbol, and then after the character segmentation module determines the boundary of each character, the character segmentation module sends the boundary information of each character to the error correction symbol detection module. After the error correction symbol detection module obtains the boundary information of each character, the error correction symbol detection module then determines the modification location of the error correction symbol in the text based on the boundary information of each character and the display location of the error correction symbol in the text.

In some embodiments, the error correction symbol detection module may alternatively determine the modification location of the error correction symbol in the text only based on the display location of the error correction symbol in the text.

In the following embodiments of this application, after receiving the boundary information of each character sent by the character segmentation module, the error correction symbol detection module then determines the modification location of the error correction symbol in the text based on the display location of the image of the error correction symbol in the text and the boundary information of each character. A specific implementation in which the error correction symbol detection module determines the modification location of the error correction symbol in the text is not limited in this embodiment of this application.

The error correction symbol detection module is further configured to send the boundary information of the error correction symbol to the paragraph detection module.

After receiving the boundary information of the error correction symbol, the paragraph detection module determines, based on the boundary information of the error correction symbol, the text content modified by using the error correction symbol. For example, if the error correction symbol is an addition symbol, the text content modified by using the error correction symbol may be understood as a character sequence added by the addition symbol.

Optionally, in some embodiments, if the character sequence added by the addition symbol includes a plurality of lines, and the plurality of lines are in a same paragraph, the paragraph detection module combines the character sequence including the plurality of lines into one paragraph, and the paragraph is the text content modified by using the error correction symbol.

Optionally, in some embodiments, if the character sequence added by the addition symbol includes one line, the paragraph detection module uses the character sequence including one line as the text content modified by using the error correction symbol.

After the paragraph detection module determines the text content modified by using the error correction symbol, the paragraph detection module is further configured to send the text content modified by using the error correction symbol to the text modification module.

The error correction symbol detection module is further configured to send the type of the error correction symbol and the modification location of the error correction symbol in the text to the text modification module.

It should be noted that the error correction symbol detection module may simultaneously send the type of the error correction symbol and the modification location of the error correction symbol in the text to the text modification module, or may separately send the type of the error correction symbol and the modification location of the error correction symbol in the text to the text modification module. This is not limited in this embodiment of this application.

After the text modification module receives the text content modified by using the error correction symbol, the type of the error correction symbol, and the modification location of the error correction symbol in the text, the text modification module modifies the text based on the text content modified by using the error correction symbol, the type of the error correction symbol, and the modification location of the error correction symbol in the text, to obtain a modified text.

Optionally, in some embodiments, the error correction symbol detection module may not send the type of the error correction symbol and the modification location of the error correction symbol in the text to the text modification module, but send the type of the error correction symbol and the modification location of the error correction symbol in the text to the paragraph detection module when sending the boundary information of the error correction symbol to the paragraph detection module. Then, the paragraph detection module sends the type of the error correction symbol and the modification location of the error correction symbol in the text to the text modification module.

It should be noted that, the error correction symbol detection module may simultaneously send, to the paragraph detection module, the boundary information of the error correction symbol, the type of the error correction symbol, and the modification location of the error correction symbol in the text, or may separately send, to the paragraph detection module, the boundary information of the error correction symbol, the type of the error correction symbol, and the modification location of the error correction symbol in the text. This is not limited in this embodiment of this application.

It should be noted that the paragraph detection module may simultaneously send the text content modified by using the error correction symbol, the type of the error correction symbol, and the modification location of the error correction symbol in the text to the text modification module, or may separately send the text content modified by using the error correction symbol, the type of the error correction symbol, and the modification location of the error correction symbol in the text to the text modification module. This is not limited in this embodiment of this application.

It should be noted that, the one or more functional modules may be randomly combined to implement a preset function, or may exist independently to implement a preset function. This is not limited in this embodiment of this application.

It should be noted that, if the electronic device 100 is a terminal device such as a mobile phone, and does not have a capability of recognizing an error correction symbol in a text or a capability of modifying a text based on the error correction symbol, the electronic device 100 may send the recognized text to another device having the capability of recognizing the error correction symbol. The another device having the capability of recognizing the error correction symbol recognizes an image of the error correction symbol in the text, determines, based on the image of the error correction symbol, a type of the error correction symbol, text content modified by using the error correction symbol, and a modification location of the error correction symbol, and modifies the original text to obtain a modified text. The another device having the capability of recognizing the error correction symbol sends the modified text to the electronic device 100, and the electronic device 100 displays or displays and stores the modified text. That is, a plurality of devices may collaboratively recognize the error correction symbol in the text, and modify the text content based on the error correction symbol, to obtain the modified text. A specific implementation in which the plurality of devices collaboratively recognize the error correction symbol in the text and modify the text content based on the error correction symbol is not limited in this embodiment of this application.

First, the electronic device 100 needs to recognize a text, and the text includes a character and an error correction symbol. The error correction symbol includes but is not limited to: a deletion symbol, a restoration symbol, a transposition symbol, a correction symbol, an addition symbol, an emphasis symbol, a prompt symbol, a dispatch symbol, a c-paragraph symbol, a paragraph combination symbol, an indentation symbol, a forward symbol, or the like. The character includes but is not limited to a text, a letter, a punctuation mark, and a digit. The electronic device 100 needs to determine a boundary of the text. The text may include a plurality of text lines. The electronic device 100 may recognize a boundary of each text line. The boundary of each text line includes a left boundary, a right boundary, an upper boundary, a lower boundary, and the like of each text line.

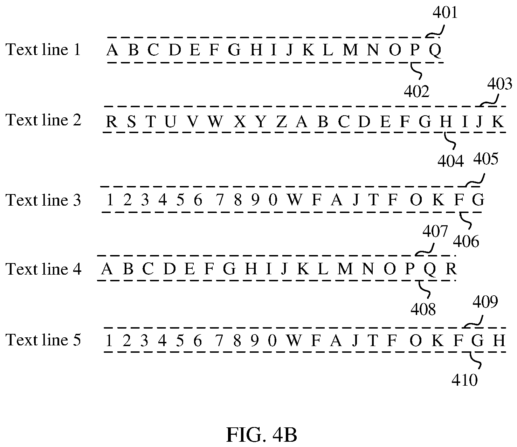

FIG. 4B is an example of a diagram of a text.

The text shown in FIG. 4B includes five text lines, each text line includes several characters.

Optionally, when recognizing the text, the electronic device 100 may recognize a pixel region included in a text image. For example, the pixel region included in the text image shown in FIG. 4B is 100×80, that is, a length of the text image recognized by the electronic device 100 is 100 pixels, and a width is 80 pixels.

Optionally, when the electronic device 100 recognizes the text, if the text includes a plurality of text lines, the electronic device 100 may separately recognize a pixel region included in an image of each text line.

For example, in a text line 1, content included in the text line 1 is "ABCDEFGHIJKLMNOPQ", a left boundary of the text line 1 is a left boundary of the character "A", and a right boundary of the text line 1 is a right boundary of the character "Q". An upper boundary of the text line 1 is an upper boundary of a region in which the characters in the text line 1 are located. For example, the upper boundary of the text line 1 in FIG. 4B is a dashed line 401. A lower boundary of the text line 1 is a lower boundary of a region in which the characters in the text line 1 are located. For example, the lower boundary of the text line 1 in FIG. 4B is a dashed line 402.

Optionally, the electronic device 100 may recognize that a pixel region included in an image of the text line 1 is 80×10. That is, a length of the image of the text line 1 is 80 pixels, and a width is 10 pixels.

For example, in a text line 2, content included in the text line 2 is "RSTUVWXYZABCDEFGHIJK", a left boundary of the text line 2 is a left boundary of the character "R", and a right boundary of the text line 2 is a right boundary of the character "K". An upper boundary of the text line 2 is an upper boundary of a region in which the characters in the text line 2 are located. For example, the upper boundary of the text line 2 in FIG. 4B is a dashed line 403. A lower boundary of the text line 2 is a lower boundary of a region in which the characters in the text line 2 are located. For example, the lower boundary of the text line 2 in FIG. 4B is a dashed line 404.

A line distance between the text line 1 and the text line 2 is a distance between the lower boundary of the text line 1 and the upper boundary of the text line 2, for example, a distance between the dashed line 402 and the dashed line 403.

Optionally, the electronic device 100 may recognize that a pixel region included in an image of the text line 2 is 100×10. That is, a length of the image of the text line 2 is 100 pixels, and a width is 10 pixels.

For example, in a text line 3, content included in the text line 3 is "1234567890WFAJTFOKFG", a left boundary of the text line 3 is a left boundary of the character "1 ", and a right boundary of the text line 3 is a right boundary of the character "G". An upper boundary of the text line 3 is an upper boundary of a region in which the characters in the text line 3 are located. For example, the upper boundary of the text line 3 in FIG. 4B is a dashed line 405. A lower boundary of the text line 3 is a lower boundary of a region in which the characters in the text line 3 are located. For example, the lower boundary of the text line 3 in FIG. 4B is a dashed line 406.

A line distance between the text line 2 and the text line 3 is a distance between the lower boundary of the text line 2 and the upper boundary of the text line 3, for example, a distance between the dashed line 404 and the dashed line 405.

Optionally, the electronic device 100 may recognize that a pixel region included in an image of the text line 3 is 100×10. That is, a length of the image of the text line 3 is 100 pixels, and a width is 10 pixels.

For example, in a text line 4, content included in the text line 4 is "ABCDEFGHIJKLMNOPQR", a left boundary of the text line 4 is a left boundary of the character "A", and a right boundary of the text line 4 is a right boundary of the character "R". An upper boundary of the text line 4 is an upper boundary of a region in which the characters in the text line 4 are located. For example, the upper boundary of the text line 4 in FIG. 4B is a dashed line 407. A lower boundary of the text line 4 is a lower boundary of a region in which the characters in the text line 4 are located. For example, the lower boundary of the text line 4 in FIG. 4B is a dashed line 408.

A line distance between the text line 3 and the text line 4 is a distance between the lower boundary of the text line 3 and the upper boundary of the text line 4, for example, a distance between the dashed line 406 and the dashed line 407.

Optionally, the electronic device 100 may recognize that a pixel region included in an image of the text line 4 is 85×10. That is, a length of the image of the text line 4 is 85 pixels, and a width is 10 pixels.

For example, in a text line 5, content included in the text line 5 is "1234567890WFAJTFOKFGH", a left boundary of the text line 5 is a left boundary of the character "A", and a right boundary of the text line 5 is a right boundary of the character "H". An upper boundary of the text line 5 is an upper boundary of a region in which the characters in the text line 5 are located. For example, the upper boundary of the text line 5 in FIG. 4B is a dashed line 409. A lower boundary of the text line 5 is a lower boundary of a region in which the characters in the text line 5 are located. For example, the lower boundary of the text line 5 in FIG. 4B is a dashed line 410.

A line distance between the text line 4 and the text line 5 is a distance between the lower boundary of the text line 4 and the upper boundary of the text line 5, for example, a distance between the dashed line 409 and the dashed line 410.

Optionally, the electronic device 100 may recognize that a pixel region included in an image of the text line 5 is 105×10. That is, a length of the image of the text line 5 is 105 pixels, and a width is 10 pixels.

First, the electronic device 100 needs to recognize an image of one or more error correction symbols included in the text, and determine a boundary of the one or more error correction symbols based on the image of the one or more error correction symbols. The boundary of the one or more error correction symbols is used by the electronic device 100 to determine text content modified by using the error correction symbol.

Before recognizing the image of the one or more error correction symbols included in the text, the electronic device 100 may obtain an error correction symbol recognition model through training. In this way, the electronic device 100 can recognize the error correction symbol in the text based on the error correction symbol recognition model.

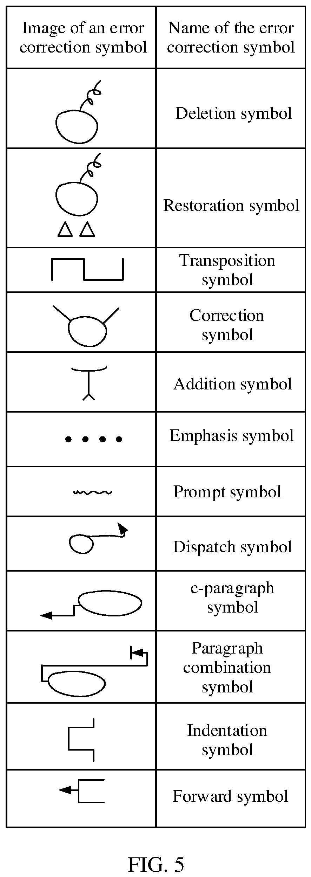

FIG. 5 is an example of a diagram of a correspondence between images of some error correction symbols and names of the error correction symbols. An image of a deletion symbol, an image of a restoration symbol, an image of a transposition symbol, an image of a correction symbol, an image of an addition symbol, an image of an emphasis symbol, an image of a prompt symbol, an image of a dispatch symbol, an image of a c-paragraph symbol, an image of a paragraph combination symbol, an image of an indentation symbol, and an image of a forward symbol are used as an example. Functions of the error correction symbols are described in detail in the foregoing embodiments, and details are not described herein again in this embodiment of this application. It should be noted that more other types of error correction symbols may be further included. This is not limited in this embodiment of this application.

A specific training process is as follows: The electronic device 100 uses a text including an error correction symbol as an input of an error correction symbol recognition model, the error correction symbol recognition model outputs an image recognition result of the error correction symbol in the text, and calculates a similarity between an image feature of the output image recognition result of the error correction symbol and a preset image feature of the error correction symbol. If the similarity is less than a preset value, the text including the error correction symbol continues to be used as the input of the error correction symbol recognition model, the error correction symbol recognition model outputs an image recognition result of the error correction symbol, and calculates the similarity between the image feature of the output image recognition result of the error correction symbol and the preset image feature of the error correction symbol until the similarity is greater than the preset value. In this case, the error correction symbol recognition model can accurately recognize the image of the error correction symbol included in the text. According to the foregoing method, the electronic device 100 can train the error correction symbol recognition model, so that the error correction symbol recognition model can recognize one or more different types of error correction symbols from the text.

Optionally, the foregoing error correction symbol recognition model may alternatively be trained by another device (for example, a server), and the another device (for example, the server) sends the trained error correction symbol recognition model to the electronic device 100. After the electronic device 100 receives the error correction symbol recognition model, the electronic device 100 may recognize, based on the error correction symbol recognition model, one or more different types of error correction symbols included in the text.

Optionally, the electronic device 100 may recognize the text, and send the text including the error correction symbol to another device (for example, a server). The another device (for example, the server) recognizes the error correction symbol included in the text, and modifies the text based on the recognized error correction symbol, to obtain a modified text.

The electronic device 100 recognizes an image of the error correction symbol included in the text, and obtains a display location of the image of the error correction symbol in the text image. The electronic device 100 may determine one or more of a boundary of the one or more error correction symbols, an orientation of the one or more error correction symbols based on the image of the error correction symbol and the type of the error correction symbol. The boundary of the error correction symbol includes one or more of an upper boundary, a lower boundary, a left boundary, and a right boundary, and the orientation of the error correction symbol includes one or more of an upward orientation, a downward orientation, a leftward orientation, and a rightward orientation. In this way, the electronic device 100 can determine, based on the one or more of the boundary of the error correction symbol and the orientation of the error correction symbol, the text content modified by using the error correction symbol.

For example, if the error correction symbol is an addition symbol, how the electronic device 100 determines modified text content of the addition symbol based on an image of the addition symbol is used as an example for description.

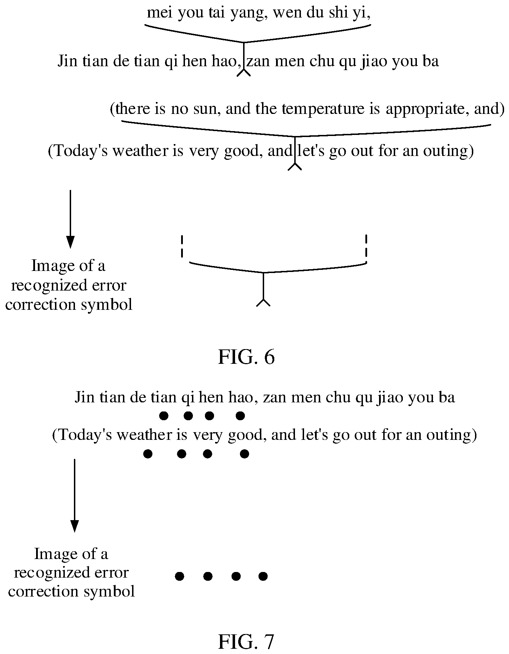

FIG. 6 is an example of a diagram of a text recognized by the electronic device 100 and an error correction symbol included in the text.

The electronic device 100 may recognize an image of the error correction symbol included in the text, for example, an image of an addition symbol shown in FIG. 6.

Further, the electronic device 100 may determine a boundary of the addition symbol based on the image of the addition symbol and a type of the error correction symbol. The boundary of the addition symbol shown in FIG. 6 includes a pixel location pointed to by an arrow of the addition symbol, a pixel location pointed to by a left bracket of the addition symbol, a pixel location pointed to by a right bracket of the addition symbol, and an orientation of the addition symbol is upward. The pixel location pointed to by the arrow of the addition symbol may be a pixel location between the character "," and the character "zan". The pixel location pointed to by the left bracket of the addition symbol may be a pixel location on a left side of the character "mei". For example, a dashed line on the left side shown in FIG. 6 is the pixel location pointed to by the left bracket of the addition symbol. The pixel location pointed to by the right bracket of the addition symbol may be a pixel location on a right side of the character ",". For example, a dashed line on the right side shown in FIG. 6 is a pixel location pointed to by the right bracket of the addition symbol. Herein, the pixel location pointed to by the arrow of the addition symbol may be referred to as a lower boundary of the addition symbol, the pixel location pointed to by the left bracket of the addition symbol may be referred to as a left boundary of the addition symbol, and the pixel location pointed to by the right bracket of the addition symbol may be referred to as a right boundary of the addition symbol.

In another embodiment, the boundary of the addition symbol may be further determined in another manner. This is not limited in this embodiment of this application. For example, the boundary of the error correction symbol is determined only based on the image of the error correction symbol.

The electronic device 100 may determine, based on the boundary of the error correction symbol, the text content modified by using the error correction symbol.

In some embodiments, the text content modified by using the error correction symbol may include one line or a plurality of lines. If a text range modified by using the error correction symbol is one line, the electronic device 100 may directly insert the one line of text into the text. If a text range modified by using the error correction symbol is a plurality of lines, the electronic device 100 may determine, by using methods such as semantic analysis, text line distance detection, and text similarity, whether the plurality of text lines belong to one paragraph. If the plurality of text lines belong to one paragraph, the electronic device 100 may aggregate the plurality of text lines into one paragraph, and then insert a paragraph obtained through aggregation into the text. If the plurality of text lines do not belong to one paragraph, the electronic device 100 divides the plurality of text lines into a plurality of different paragraphs. Then, the plurality of different paragraphs are inserted into the original text.

In some embodiments, the electronic device 100 may directly determine, based on the image of the error correction symbol, the text content modified by using the error correction symbol, and no longer determine the boundary of the error correction symbol. A specific implementation in which the electronic device 100 determines the text content modified by using the error correction symbol is not limited in this embodiment of this application. For different types of error correction symbols, manners in which the electronic device 100 determines the text content modified by using the error correction symbols are also different.

For example, if the error correction symbol is an emphasis symbol, how the electronic device 100 determines modified text content based on an image of the emphasis symbol is used as an example for description.

FIG. 7 is an example of a diagram of a text recognized by the electronic device 100 and an emphasis symbol included in the text.

The electronic device 100 may recognize an image of the emphasis symbol included in the text, for example, an image of the emphasis symbol shown in FIG. 7.

Further, the electronic device 100 may determine, based on the image of the addition symbol, text content modified by using the emphasis symbol. A pixel location at which the emphasis symbol is located is a pixel location at which the character "tian" is located, a pixel location at which the character "qi" is located, a pixel location at which the character "hen" is located, and a pixel location at which the character "hao" is located. In this way, the electronic device 100 determines, based on the pixel location at which the emphasis symbol is located, that the text content modified by using the emphasis symbol is "tian qi hen hao (The weather is very good)". A function of the emphasis symbol is to mark a beautiful or key letter, word, phrase, long sentence, paragraph, and the like in the text. In this way, after the electronic device 100 determines the text content modified by using the emphasis symbol, the electronic device 100 may highlight (for example, display in bold) the text content modified by using the emphasis symbol.

Optionally, after the electronic device 100 recognizes the image of the one or more error correction symbols included in the text, the electronic device 100 erases the image of the error correction symbol from the text, to obtain a text of an image that does not include the error correction symbol. The electronic device 100 determines, based on the text of the image that does not include the error correction symbol, a boundary of each character in the text of the image that does not include the error correction symbol. This can avoid a case in which the text includes the error correction symbol and the error correction symbol is incorrectly recognized as a character, thereby improving accuracy of character recognition.

First, the electronic device 100 recognizes text content and an image of an error correction symbol included in a text. The electronic device 100 erases the image of the error correction symbol from the text, to obtain text content that does not include the image of the error correction symbol. The electronic device 100 performs character boundary recognition based on the text that does not include the image of the error correction symbol. This can avoid a case in which the text includes the error correction symbol and the error correction symbol is incorrectly recognized as a character, thereby improving accuracy of character boundary recognition.

The electronic device 100 may determine a central location of each character in the text based on the recognized text content and a quantity of characters in the text.

The electronic device 100 obtains, based on the quantity of characters in the text line and a quantity of pixels occupied by the text line, a quantity of pixels occupied by each character in the text line, and the electronic device 100 determines a center of each character based on the quantity of pixels occupied by each character in the text line.

Optionally, the electronic device 100 may use a location of one or more middle pixels in the quantity of pixels occupied by each character as a center of the pixel.

It should be noted that different types of characters occupy different quantities of pixels. Characters of a same type may occupy different quantities of pixels. This is not limited in this embodiment of this application.

It should be noted that the electronic device 100 may further determine a center of each character in the text line in another manner. This is not limited in this embodiment of this application.

Optionally, after determining the central location of each character in the text, the electronic device 100 may calculate a distance between the center of the character and a central location of a left adjacent character and a distance between the center of the character and a central location of a right adjacent character, and further determine a left boundary and a right boundary of each character. In this way, the quantity of characters is considered, the boundary of each character is determined based on the quantity of characters and the text content, thereby improving accuracy of character boundary division.

In some embodiments, the electronic device 100 may calculate a distance between the center of the character and a central location of a left/right adjacent character, and use a half of a left/right distance between the centers of the two adjacent characters as a distance between the center of the character and a boundary of the character. For example, the electronic device 100 calculates that a distance between centers of two adjacent characters is 10 pixels. In this case, a distance between a center of a first character and a right boundary of the first character is five pixels, and a distance between a center of a second character and a left boundary of the second character is five pixels. For the first character in the text line, the left boundary of the first character is a quantity of pixels on the left side of the center of the first character. For the last character in the text line, the right boundary of the last character is a quantity of pixels on the right side of the center of the last character. Based on this manner, the electronic device 100 can determine a boundary of each character in the text.

In some embodiments, the electronic device 100 may calculate a distance between the center of the character and a central location of a left/right adjacent character, obtain a half of a left/right distance between the centers of the two adjacent characters, and use a minimum value of the half of the distance between the center of the character and the center of the left/right adjacent character as a distance between the center of the character and a left/right boundary. For example, a half value of the distance between the center of the character and the center of the left adjacent character is five pixels, and a half value of the distance between the center of the character and the center of the right adjacent character is six pixels. In this case, the distance between the center of the character and the left/right boundary is a distance of five pixels.

In some embodiments, the electronic device 100 determines a quantity of pixels occupied by each character in the text. A pixel location in a middle location of the quantity of pixels occupied by each character is used as a center of each pixel. In the quantity of pixels occupied by each character, a quantity of pixels on the left side of the center of the character is a distance between the center of the character and the left boundary of the character. A quantity of pixels on the right side of the center of the character is a distance between the center of the character and the right boundary of the character. For example, a quantity of pixels occupied by the first character in a text line is 10 pixels, and a center of the first character is a location of a fifth pixel in the 10 pixels. The distance between the center of the first character and the left boundary of the first character is four pixels. The distance between the center of the first character and the right boundary of the first character is five pixels.

It should be noted that, in addition to the foregoing method for determining a character boundary, the electronic device 100 may further determine the character boundary in another manner. This is not limited in this embodiment of this application.

In this embodiment of this application, in a quantity of pixels occupied by each character, a quantity of pixels on the left side of the center of the character is a distance between the center of the character and the left boundary of the character. An example in which the quantity of pixels on the right side of the center of the character is a distance between the center of the character and the right boundary of the character is used for description.

For example, if the electronic device 100 recognizes that there are 10 characters in total in the text line, a size of a pixel included in an image in the text line 1 is 100×10. The electronic device 100 divides 100 pixels into 10 parts.

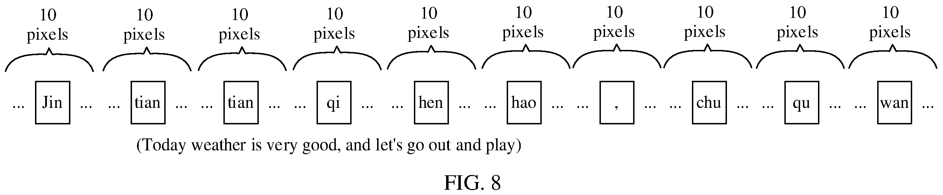

In some embodiments, each character may occupy 10 pixels. FIG. 8 is an example of a diagram of pixel division performed by an electronic device 100 based on a quantity of characters in a text. The first character occupies the 0^{th} pixel to the 10^{th} pixel, the second character occupies the 11^{th} pixel to the 20^{th} pixel, the third character occupies the 21^{st} pixel to the 30^{th} pixel, by analogy, the ninth character occupies the 81^{st} pixel to the 90^{th} pixel, and the tenth character occupies the 91^{st} pixel to the 100^{th} pixel.

Each character occupies 10 pixels. The electronic device 100 may obtain, based on a quantity of pixels occupied by each type of the center of the character predicted by a neural network, a location of only one or more pixels in every 10 pixels, and predict a recognition result of the center of the character, a prediction result of a location of another pixel is an empty type, and a location of the pixel is used as a center of the character.

For example, the center of the first character is the 5^{th} pixel or the 6^{th} pixel, the left boundary of the first character is the 0^{th} pixel, and the right boundary of the first character is the 10^{th} pixel. The center of the second character is the 15^{th} pixel or the 16^{th} pixel, the left boundary of the second character is the 11^{th} pixel, and the right boundary of the second character is the 20^{th} pixel. The center of the third character is the 25^{th} pixel or the 26^{th} pixel, the left boundary of the third character is the 21^{st} pixel, and the right boundary of the third character is the 30^{th} pixel. By analogy, the center of the ninth character is the 85^{th} pixel or the 86^{th} pixel, the left boundary of the ninth character is the 81^{st} pixel, and the right boundary of the third character is the 90^{th} pixel. The center of the tenth character is the 95^{th} pixel or the 96^{th} pixel, the left boundary of the tenth character is the 91^{st} pixel, and the right boundary of the tenth character is the 100^{th} pixel.

In another embodiment, based on different types of characters, the different types of characters occupy different quantities of pixels. The type of character includes but is not limited to a text, a letter, a punctuation mark, and a digit. For example, a quantity of pixels occupied by a text is greater than a quantity of pixels occupied by a punctuation mark.

In some embodiments, a quantity of characters occupied by characters of a same type but with different attributes may also be different. Characters with different attributes are not the same character but are of the same type. For example, a quantity of pixels occupied by the character "12" and a quantity of pixels occupied by the character "1" may be different.

Based on the foregoing manner, the electronic device 100 may obtain a center of each character and a boundary (that is, a left boundary and a right boundary) of each character in the text.

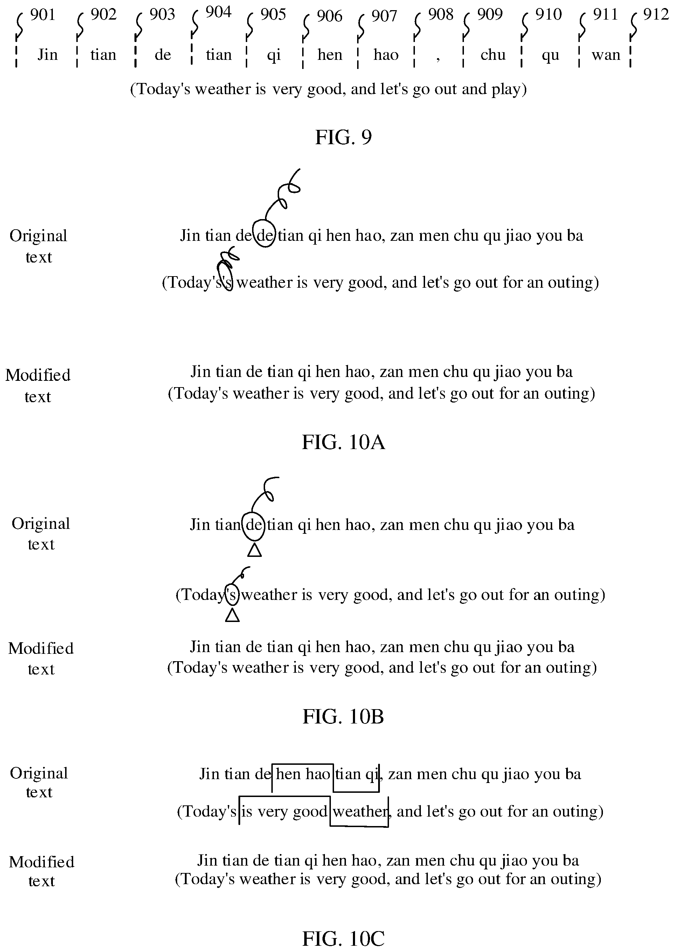

FIG. 9 is an example of a diagram of obtaining a boundary of each character in text aggregation by an electronic device 100.

In FIG. 9, a left line of a character "jin" is a dashed line 901, and a right line of the character "jin" is a dashed line 902. A left line of a character "tian" is the dashed line 902, and a right line of the character "tian" is a dashed line 903. A left line of a character "de" is the dashed line 903, and a right line of the character "de" is a dashed line 904. A left line of a character "tian" is the dashed line 904, and a right line of the character "tian" is a dashed line 905. A left line of a character "qi" is the dashed line 905, and a right line of the character "qi" is a dashed line 906. A left line of a character "hen" is the dashed line 906, and a right line of the character "hen" is a dashed line 907. A left line of a character "hao" is the dashed line 907, and a right line of the character "hao" is a dashed line 908. A left line of a character "," is the dashed line 908, and a right line of the character "," is a dashed line 909. A left line of a character "chu" is the dashed line 909, and a right line of the character "chu" is a dashed line 910. A left line of a character "qu" is the dashed line 910, and a right line of the character "qu" is a dashed line 911. A left line of a character "wan" is the dashed line 911, and a right line of the character "wan" is a dashed line 912.

Optionally, the electronic device 100 needs to determine, based on a boundary of an image of an error correction symbol, a modification location of the image of the error correction symbol in the text. The modification location of the image of the error correction symbol in the text may be understood as that text content modified by using the error correction symbol is located between which characters.

In another embodiment, the electronic device 100 needs to determine, based on a boundary of an image of an error correction symbol and a boundary of each character in the text, a modification location of the image of the error correction symbol in the text.

After the electronic device 100 determines the boundary of each character in the text, the electronic device 100 may determine the modification location of the error correction symbol in the text based on a display location of the error correction symbol in the image.

For example, for the addition symbol shown in FIG. 6, the electronic device 100 determines, based on a display location of the addition symbol in the text image and a boundary of each character in FIG. 6, that an insertion location of the addition symbol is between the character "," and the character "zan". That is, the insertion location of the addition symbol is between the right boundary of the character "," and the left boundary of the character "zan".

For example, for the emphasis symbol shown in FIG. 7, the electronic device 100 determines, based on a display location of the emphasis symbol in the text image and a boundary of each character in FIG. 6, that a modification location of the emphasis symbol is between the character "tian", the character "qi", the character "hen", and the character "hao". That is, the emphasis symbol is used to highlight the character "tian", the character "qi", the character "hen", and the character "hao" in FIG. 7.

It should be noted that, for different types of error correction symbols, modification locations of the error correction symbols in the text are also different.

In another embodiment, the electronic device 100 needs to determine, based on a boundary of an image of an error correction symbol and a boundary of some characters in the text, a modification location of the image of the error correction symbol in the text.

A region in which the some characters are located may be characters in a display region in which the image of the error correction symbol is located, and the region in which the some characters are located may be greater than the display region in which the image of the error correction symbol is located. That is, the electronic device 100 does not need to determine the boundary of each character, and only needs to determine a boundary of a character near the image of the error correction symbol, to reduce a calculation amount of the electronic device 100.

Optionally, the electronic device 100 modifies the text based on the modification location of the image of the error correction symbol in the text, the text content modified by using the error correction symbol, and a type of the error correction symbol, to obtain a modified text.

The electronic device 100 combines the text content modified by using the error correction symbol and the original text based on the modification location of the image of the error correction symbol in the text, the text content modified by using the error correction symbol, and the type of the error correction symbol, and a combination rule changes based on different types of the error correction symbol. For each type of error correction symbol, how to combine the text content modified by using the error correction symbol with the original text is described in detail in the following embodiments.

Optionally, the electronic device 100 may classify the error correction symbol into a cross-line error correction symbol and a non-cross-line error correction symbol based on whether the original text needs to be modified across text lines. The cross-line error correction symbol includes but is not limited to: a restoration symbol, an addition symbol, a correction symbol, a dispatch symbol, a c-paragraph symbol, a paragraph combination symbol, or the like. The non-cross-line error correction symbol includes but is not limited to: a deletion symbol, a transposition symbol, an emphasis symbol, a prompt symbol, an indentation symbol, a forward symbol, or the like.

First, how the electronic device 100 modifies the original text based on the non-cross-line error correction symbol is described.

A process of modifying the original text by using the non-cross-line error correction symbol may include the following steps:
Step 1: The electronic device 100 obtains a text image, where the text image includes a character and a non-cross-line error correction symbol.
Step 2: The electronic device 100 obtains and recognizes an image of the non-cross-line error correction symbol in the text image.

Optionally, after the electronic device 100 recognizes the image of the non-cross-line error correction symbol, the electronic device 100 may further obtain a pixel segmentation image of the image of the non-cross-line error correction symbol.

Optionally, after the electronic device 100 recognizes the image of the non-cross-line error correction symbol, the electronic device 100 may further obtain a type of the image of the non-cross-line error correction symbol. The non-cross-line error correction symbol includes but is not limited to: a deletion symbol, a restoration symbol, a transposition symbol, an emphasis symbol, a prompt symbol, an indentation symbol, a forward symbol, or the like.

Optionally, after the electronic device 100 recognizes the image of the non-cross-line error correction symbol, the electronic device 100 may further obtain a boundary of the image of the non-cross-line error correction symbol. The boundary of the image of the non-cross-line error correction symbol is used to determine text content modified by using the non-cross-line error correction symbol.

Optionally, after the electronic device 100 obtains the pixel segmentation image of the image of the non-cross-line error correction symbol, the electronic device 100 may further obtain a boundary of the image of the non-cross-line error correction symbol. The boundary of the image of the non-cross-line error correction symbol is used to determine the text content modified by using the non-cross-line error correction symbol.

Optionally, after the electronic device 100 recognizes the image of the non-cross-line error correction symbol in the text image, the electronic device 100 may determine a display location of the image of the non-cross-line error correction symbol in the text image.

Step 3: The electronic device 100 erases the image of the non-cross-line error correction symbol from the text image, to obtain a text image that does not include the image of the non-cross-line error correction symbol.

Optionally, the electronic device 100 may erase, based on the pixel segmentation image of the image of the non-cross-line error correction symbol, the image of the non-cross-line error correction symbol from the text image, to obtain a text image that does not include the image of the non-cross-line error correction symbol.

Step 4: The electronic device 100 performs character content recognition on the text image, and obtains a boundary of each character in the text image.

Step 5: The electronic device 100 determines, based on the type of the image of the non-cross-line error correction symbol and the boundary of the image of the non-cross-line error correction symbol, the text content modified by using the non-cross-line error correction symbol.

Step 6: The electronic device 100 determines a modification location of the non-cross-line error correction symbol based on a display location of the image of the non-cross-line error correction symbol in the text image.

Optionally, the electronic device 100 determines the modification location of the non-cross-line error correction symbol based on the display location (or referred to as a boundary of the image of the error correction symbol) of the image of the non-cross-line error correction symbol in the text image and a boundary (or referred to as a display location of each character in the text image) of each character in the text image.

Step 7: The electronic device 100 modifies the original text based on the modification location of the non-cross-line error correction symbol, the text content modified by using the non-cross-line error correction symbol, and the type of the image of the non-cross-line error correction symbol, to obtain a modified text.

The following separately describes how the electronic device 100 performs modification based on a deletion symbol, a restoration symbol, a transposition symbol, an emphasis symbol, a prompt symbol, an indentation symbol, and a forward symbol.

### 1. Deletion symbol

The electronic device 100 determines a boundary of the deletion symbol based on an image of the deletion symbol. The boundary of the deletion symbol may be understood as a text range included in a circle symbol in the deletion symbol. The electronic device 100 determines, based on the boundary of the deletion symbol, text content to be deleted by the deletion symbol. The electronic device 100 deletes, from the original text, the text content to be deleted by the deletion symbol from the original text, to obtain a modified text.

For example, in FIG. 10A, the original text is "Jin tian de tian qi hen hao, zan men chu qu jiao you ba (Today's weather is very good, and let's go out for an outing)". The boundary of the deletion symbol is the left boundary of the second character "de" and the right boundary of the second character "de". The text content deleted by the deletion symbol is "de". The electronic device 100 deletes the second character "de" in the original text, to obtain a modified text "Jin tian de tian qi hen hao, zan men chu qu jiao you ba (Today's weather is very good, and let's go out for an outing)".

### 2. Restoration symbol

The electronic device 100 determines a boundary of the restoration symbol based on an image of the restoration symbol. The boundary of the restoration symbol may be understood as text content included in a triangle symbol in the restoration symbol. The electronic device 100 determines, based on the boundary of the restoration symbol, text content restored by the restoration symbol. The electronic device 100 reserves the text content restored by the restoration symbol in the original text, to obtain a modified text.

For example, in FIG. 10B, the original text is "Jin tian tian qi hen hao, zan men chu qu jiao you ba (Today weather is very good, and let's go out for an outing)". The second character "de" has been deleted before by the deletion symbol. All or some of the characters deleted before by the deletion symbol is restored by the restoration symbol. For example, a boundary of the deletion symbol is a left boundary of the character "de" and a right boundary of the character "de", and text content deleted by the deletion symbol is that a boundary of the restoration symbol in FIG. 10B is the left boundary of the second character "de" and the right boundary of the second character "de". The electronic device 100 reserves the second character "de" in the original text, to obtain a modified text "Jin tian de tian qi hen hao, zan men chu qu jiao you ba (Today's weather is very good, and let's go out for an outing)".

### 3. Transposition symbol

The electronic device 100 determines a boundary of the transposition symbol based on an image of the transposition symbol. The boundary of the transposition symbol may be understood as text content included in a high-order horizontal line symbol and text content included in a low-order horizontal line symbol in the transposition symbol. The electronic device 100 determines, based on the boundary of the transposition symbol, text content to be adjusted by the transposition symbol. The electronic device 100 modifies the original text based on the text content to be adjusted by the transposition symbol, to obtain a modified text.

For example, in FIG. 10C, the original text is "Jin tian de hen hao tian qi, zan men chu qu jiao you ba (Today's is very good weather, and let's go out for an outing)". In the original text, locations of the characters "tian qi" and "hen hao" are reversed, and the transposition symbol can be used to modify the locations of the characters "tian qi" and "hen hao". The electronic device 100 recognizes a boundary of a high-order horizontal line and a boundary of a low-order horizontal line of the transposition symbol, determines, based on the boundary of the high-order horizontal line, text content modified by using the high-order horizontal line, and determines, based on the boundary of the low-order horizontal line, text content modified by using the low-order horizontal line. The electronic device 100 exchanges locations of the text content modified by using the high-order horizontal line and the text content modified by using the low-order horizontal line, to obtain adjusted text content.

For example, in FIG. 10C, the electronic device 100 recognizes that a boundary of a high-order horizontal line of the transposition symbol is a left boundary of the character "hen" and a right boundary of the character "hao", and determines that text content modified by using the high-order horizontal line is "hen hao". The electronic device 100 recognizes that a boundary of a low-order horizontal line of the transposition symbol is a left boundary of the character "tian" and a right boundary of the character "qi", and determines that text content modified by using the low-order horizontal line is "tian qi". The electronic device 100 exchanges locations of the text content "hen hao" and "tian qi", to obtain an adjusted text "Jin tian de tian qi hen hao, zan men chu qu jiao you ba (Today's weather is very good, and let's go out for an outing)".

### 4. Emphasis symbol

The electronic device 100 determines a boundary of the emphasis symbol based on an image of the emphasis symbol. The boundary of the emphasis symbol may be understood as text content included in a circle symbol in the emphasis symbol. The electronic device 100 determines, based on the boundary of the emphasis symbol, text content to be highlighted by the emphasis symbol. The electronic device 100 highlights the part of text content (for example, in bold or in different colors) based on the text content to be highlighted by the emphasis symbol, to obtain a modified text.

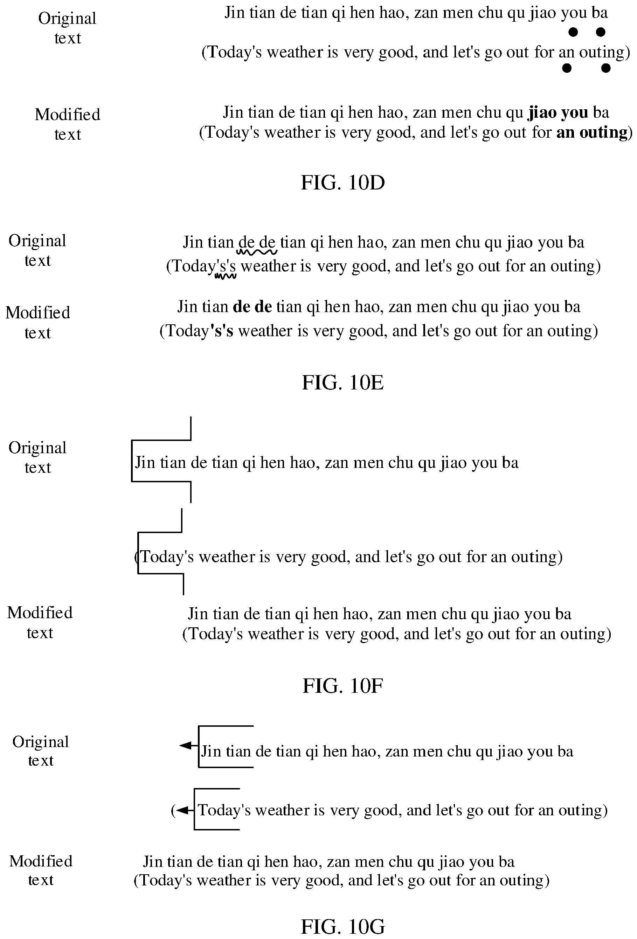

For example, in FIG. 10D, the original text is "Jin tian de tian qi hen hao, zan men chu qu jiao you ba (Today's weather is very good, and let's go out for an outing)". The boundary of the emphasis symbol is the left boundary of the character "jiao" and the right boundary of the character "you". The text content to be highlighted by the emphasis symbol is "jiao you". The electronic device 100 highlights the text content "jiao you" in the original text, for example, displays the text content in bold.

### 5. Prompt symbol

The electronic device 100 determines a boundary of the prompt symbol based on an image of the prompt symbol. The boundary of the prompt symbol may be understood as text content included in a wave symbol in the prompt symbol. The electronic device 100 determines, based on the boundary of the prompt symbol, text content to be highlighted by the prompt symbol. The electronic device 100 highlights the part of text content (for example, in bold or in different colors) based on the text content to be highlighted by the prompt symbol, to obtain a modified text.

For example, in FIG. 10E, the original text is "Jin tian de tian qi hen hao, zan men chu qu jiao you ba (Today's weather is very good, and let's go out for an outing)". The boundary of the prompt symbol is the left boundary of the first character "de" and the right boundary of the second character "de". The text content to be highlighted in the prompt symbol is "de". The electronic device 100 highlights the text content "de" in the original text, for example, displays the text content in bold.

### 6. Indentation symbol

The electronic device 100 determines a boundary of the indentation symbol based on an image of the indentation symbol. The boundary of the indentation symbol may be understood as text content included in a high-order horizontal line or a low-order horizontal line in the indentation symbol. The electronic device 100 determines, based on the boundary of the indentation symbol, text content included in the indentation symbol. The electronic device 100 moves, based on the text content included in the indentation symbol, characters that belong to a same paragraph as the text content included in the indentation symbol backward by two cells, to indicate starting another paragraph.

For example, in FIG. 10F, the electronic device 100 determines, based on the image of the indentation symbol, that a boundary of the indentation symbol is a left boundary of the character "jin" and a right boundary of the character "tian", the electronic device 100 determines that text content included in the indentation symbol is "jin tian", and the electronic device 100 moves characters that belong to a same paragraph as the text content "jin tian" backward by two cells, and starts another paragraph.

### 7. Forward symbol

The electronic device 100 determines a boundary of the forward symbol based on an image of the forward symbol. The boundary of the forward symbol may be understood as text content included in a high-order horizontal line or a low-order horizontal line in the forward symbol. The electronic device 100 determines, based on the boundary of the forward symbol, text content included in the forward symbol. The electronic device 100 moves, based on the text content included in the forward symbol, characters that are in a same paragraph as the text content included in the forward symbol forward by two cells, to indicate that the text content is not used as a separate paragraph.

For example, in FIG. 10G, the electronic device 100 determines, based on the image of the forward symbol, that a boundary of the forward symbol is a left boundary of the character "jin" and a right boundary of the character "tian", the electronic device 100 determines that text content included in the forward symbol is "jin tian", and the electronic device 100 moves characters that belong to a same paragraph as the text content "jin tian" forward by two cells, to indicate that the text content is not used as a separate paragraph.

The following describes how the electronic device 100 modifies the original text based on the cross-line error correction symbol.

A process of modifying the original text by using the cross-line error correction symbol may include the following steps:
Step 1: The electronic device 100 obtains a text image. The text image includes a character and a cross-line error correction symbol.
Step 2: The electronic device 100 obtains and recognizes an image of the cross-line error correction symbol in the text image.

Optionally, after the electronic device 100 recognizes the image of the cross-line error correction symbol, the electronic device 100 may further obtain a pixel segmentation image of the image of the cross-line error correction symbol.

Optionally, after the electronic device 100 recognizes the image of the cross-line error correction symbol, the electronic device 100 may further obtain a type of the image of the cross-line error correction symbol. The type of the image of the cross-line error correction symbol includes but is not limited to: a correction symbol, an addition symbol, a dispatch symbol, a paragraph starting symbol, a paragraph combination symbol, or the like.

Optionally, after the electronic device 100 recognizes the image of the cross-line error correction symbol, the electronic device 100 may further obtain a boundary of the image of the cross-line error correction symbol. The boundary of the image of the cross-line error correction symbol is used to determine text content modified by using the cross-line error correction symbol.

Optionally, after the electronic device 100 obtains the pixel segmentation image of the image of the cross-line error correction symbol, the electronic device 100 may further obtain a boundary of the image of the cross-line error correction symbol. The boundary of the image of the cross-line error correction symbol is used to determine the text content modified by using the cross-line error correction symbol.

Optionally, after the electronic device 100 recognizes the image of the cross-line error correction symbol in the text image, the electronic device 100 may determine a display location of the image of the cross-line error correction symbol in the text image.

Step 3: The electronic device 100 erases the image of the cross-line error correction symbol from the text image, to obtain a text image that does not include the image of the cross-line error correction symbol.

Optionally, the electronic device 100 may erase, based on the pixel segmentation image of the image of the cross-line error correction symbol, the image of the cross-line error correction symbol from the text image, to obtain a text image that does not include the image of the cross-line error correction symbol.

Step 4: The electronic device 100 performs character content recognition on the text image, and obtains a boundary of each character in the text image.

Step 5: The electronic device 100 determines, based on the type of the image of the cross-line error correction symbol and the boundary of the image of the cross-line error correction symbol, the text content modified by using the cross-line error correction symbol.

Step 6: After the electronic device 100 determines the text content modified by using the cross-line error correction symbol, the text content modified by using the cross-line error correction symbol may include one line or a plurality of lines. If a text range modified by using the cross-line error correction symbol is one line, the electronic device 100 may directly insert the one line of text into the text. If a text range modified by using the cross-line error correction symbol is a plurality of lines, the electronic device 100 may determine, by using methods such as semantic analysis, text line distance detection, and text similarity, whether the plurality of text lines belong to one paragraph. If the plurality of text lines belong to one paragraph, the electronic device 100 may aggregate the plurality of text lines into one paragraph, and then insert a paragraph obtained through aggregation into the text. If the plurality of text lines do not belong to one paragraph, the electronic device 100 divides the plurality of text lines into a plurality of different paragraphs, and then inserts the plurality of different paragraphs into the original text.

Step 7: The electronic device 100 determines a modification location of the cross-line error correction symbol based on a display location of the image of the cross-line error correction symbol in the text image.

Optionally, the electronic device 100 determines the modification location of the cross-line error correction symbol based on the display location (or referred to as a boundary of the image of the error correction symbol) of the image of the cross-line error correction symbol in the text image and a boundary (or referred to as a display location of each character in the text image) of each character in the text image.

Step 8: The electronic device 100 modifies the original text based on the modification location of the cross-line error correction symbol, the text content modified by using the cross-line error correction symbol, and the type of the image of the cross-line error correction symbol, to obtain a modified text.

The following separately describes how the electronic device 100 performs modification based on a correction symbol, an addition symbol, a dispatch symbol, a paragraph starting symbol, and a paragraph combination symbol.

### 1. Correction symbol

The electronic device 100 determines a boundary of the correction symbol based on an image of the correction symbol. The boundary of the correction symbol may be understood as text content included in a circle symbol in the correction symbol and a text range included in a left bracket and a right bracket of the correction symbol. The text content included in the circle symbol in the correction symbol is text content to be modified, and the text range included in the left bracket and the right bracket of the correction symbol is corrected text content. The electronic device 100 determines, based on the boundary of the correction symbol, the text content to be modified by using the correction symbol and the corrected text content. The electronic device 100 replaces the text content that needs to be modified in the original text with the corrected text content, to obtain a modified text.

It should be noted that the text range included in the left bracket and the right bracket of the correction symbol may include a plurality of lines. If the plurality of text lines are included, the electronic device 100 further needs to determine, by using methods such as semantic analysis, text line distance detection, and text similarity, whether the plurality of text lines belong to one paragraph. If the plurality of text lines belong to one paragraph, the electronic device 100 may aggregate the plurality of text lines into one continuous text line. If the plurality of text lines do not belong to one paragraph, the electronic device 100 divides the plurality of text lines into a plurality of different paragraphs, to obtain a plurality of discontinuous text lines.

For example, in FIG. 11A, the original text is "Jin tian de tian qi bu hao, zan men chu qu jiao you ba (Today's weather is not good, and let's go out for an outing)". The boundary of the correction symbol is the left boundary of the character "bu" and the right boundary of the character "bu", and the left boundary of the character "hen" and the right boundary of the character "hen". The text content to be modified by using the correction symbol is "bu", and the text content to be corrected by the correction symbol is "hen". The electronic device 100 replaces the text content "bu" that needs to be modified in the original text with the corrected text content "hen", to obtain a modified text "Jin tian de tian qi hen hao, zan men chu qu jiao you ba (Today's weather is very good, and let's go out for an outing)".

### 2. Addition symbol

The electronic device 100 determines a boundary of the addition symbol based on an image of the addition symbol. The boundary of the addition symbol may be understood as a text range included in a left bracket and a right bracket of the addition symbol. The text range included in the left bracket and the right bracket of the addition symbol is added text content. The electronic device 100 determines, based on the boundary of the addition symbol, the text content added by the addition symbol. The electronic device 100 adds the added text content to the original text, to obtain a modified text.

It should be noted that the text range included in the left bracket and the right bracket of the addition symbol may include a plurality of lines. If the plurality of text lines are included, the electronic device 100 further needs to determine, by using methods such as semantic analysis, text line distance detection, and text similarity, whether the plurality of text lines belong to one paragraph. If the plurality of text lines belong to one paragraph, the electronic device 100 may aggregate the plurality of text lines into one continuous text line. If the plurality of text lines do not belong to one paragraph, the electronic device 100 divides the plurality of text lines into a plurality of different paragraphs, to obtain a plurality of discontinuous text lines.

For example, in FIG. 11B, the original text is "Jin tian de tian hen hao, zan men chu qu jiao you ba (Today's day is very good, and let's go out for an outing)". The boundary of the addition symbol is the left boundary of the character "qi" and the right boundary of the character "qi". The text content to be added by the addition symbol is "qi". The electronic device 100 adds the text content "qi" that needs to be added to the original text, to obtain a modified text "Jin tian de tian qi hen hao, zan men chu qu jiao you ba (Today's weather is very good, and let's go out for an outing)".

### 3. Dispatch symbol

The electronic device 100 determines a boundary of the dispatch symbol based on an image of the dispatch symbol. The boundary of the dispatch symbol may be understood as a text range included in a circle symbol in the dispatch symbol. The electronic device 100 determines text content dispatched by the dispatch symbol based on the boundary of the dispatch symbol. The electronic device 100 modifies the original text based on the text content dispatched by the dispatch symbol and a modification location of the dispatch symbol in the original text, to obtain a modified text.

It should be noted that the text range included in the circle symbol in the dispatch symbol may include a plurality of lines. If the plurality of text lines are included, the electronic device 100 further needs to determine, by using methods such as semantic analysis, text line distance detection, and text similarity, whether the plurality of text lines belong to one paragraph. If the plurality of text lines belong to one paragraph, the electronic device 100 may aggregate the plurality of text lines into one continuous text line. If the plurality of text lines do not belong to one paragraph, the electronic device 100 divides the plurality of text lines into a plurality of different paragraphs, to obtain a plurality of discontinuous text lines.

For example, in FIG. 11C, the original text includes two text lines, text content included in the first text line is "jin tian de tian qi (today's weather)", and text content included in the second text line is "hen hao zan men chu qu jiao you ba (very good and let's go out for an outing)". The boundary of the dispatch symbol is the left boundary of the character "hen" and the right boundary of the character "hao". That is, it is determined that the text content to be dispatched by the dispatch symbol is "hen hao". The electronic device 100 further determines that the modification location of the dispatch symbol in the original text is near the left boundary of the character "qi" in the first text line. The electronic device 100 adds the text content "hen hao" that needs to be dispatched by the dispatch symbol to a location near the left boundary of the character "qi" in the first text line. At the same time, each character in the second text line is moved forward by two cells. The first modified text line is "Jin tian de tian hen hao (Today's day is very good)", and the second modified text line is "Zan men chu qu jiao you ba (Let's go out for an outing)".

### 4. c-paragraph symbol

The electronic device 100 determines a boundary of the c-paragraph symbol based on an image of the c-paragraph symbol. The boundary of the c-paragraph symbol may be understood as a text range included in a circle symbol in the c-paragraph symbol. The electronic device 100 determines text content dispatched by the c-paragraph symbol based on the boundary of the c-paragraph symbol. The electronic device 100 modifies the original text based on the text content dispatched by the c-paragraph symbol and a modification location of the c-paragraph symbol in the original text, to obtain a modified text.

It should be noted that a text range included in a circle symbol in the c-paragraph symbol may include a plurality of lines. If the plurality of text lines are included, the electronic device 100 further needs to determine, by using methods such as semantic analysis, text line distance detection, and text similarity, whether the plurality of text lines belong to one paragraph. If the plurality of text lines belong to one paragraph, the electronic device 100 may aggregate the plurality of text lines into one continuous text line. If the plurality of text lines do not belong to one paragraph, the electronic device 100 divides the plurality of text lines into a plurality of different paragraphs, to obtain a plurality of discontinuous text lines.

For example, in FIG. 11D, the original text includes one text line, and text content included in the text line is "Jin tian de tian qi hen hao zan men chu qu jiao you ba (Today's weather is very good and let's go out for an outing)". The boundary of the c-paragraph symbol is the left boundary of the character "zan" and the right boundary of the character "ba". That is, it is determined that the text content that needs to be dispatched by the c-paragraph symbol is "Zan men chu qu jiao you ba (Let's go out for an outing)". The electronic device 100 further determines that a modification location of the c-paragraph symbol in the original text is aligned with the left boundary of the character "jin" and is located in a next line of the character "jin", that is, the text content dispatched by the c-paragraph symbol is placed on a new line. In this case, the electronic device 100 adds the text content "Zan men chu qu jiao you ba (Let's go out for an outing)" that needs to be dispatched by the c-paragraph symbol to the line that is aligned with the left boundary of the character "jin" and is located in a next line of the character "jin". Two modified text lines are obtained. The first modified text line is "Jin tian de tian hen hao (Today's day is very good)", and the second modified text line is "Zan men chu qu jiao you ba (Let's go out for an outing)".

### 5. Paragraph combination symbol

The electronic device 100 determines a boundary of the paragraph combination symbol based on an image of the paragraph combination symbol. The boundary of the paragraph combination symbol may be understood as a text range included in a circle symbol in the paragraph combination symbol. The electronic device 100 determines text content dispatched by the paragraph combination symbol based on the boundary of the paragraph combination symbol. The electronic device 100 modifies the original text based on the text content dispatched by the paragraph combination symbol and a modification location of the paragraph combination symbol in the original text, to obtain a modified text.

It should be noted that a text range included in a circle symbol in the paragraph combination symbol may include a plurality of lines. If the plurality of text lines are included, the electronic device 100 further needs to determine, by using methods such as semantic analysis, text line distance detection, and text similarity, whether the plurality of text lines belong to one paragraph. If the plurality of text lines belong to one paragraph, the electronic device 100 may aggregate the plurality of text lines into one continuous text line. If the plurality of text lines do not belong to one paragraph, the electronic device 100 divides the plurality of text lines into a plurality of different paragraphs, to obtain a plurality of discontinuous text lines.

For example, in FIG. 11E, the original text includes two text lines, text content included in the first text line is "Jin tian de tian qi hen hao (Today's weather is very good)", and text content included in the second text line is "Zan men chu qu jiao you ba (Let's go out for an outing)". The boundary of the paragraph combination symbol is the left boundary of the character "zan" and the right boundary of the character "ba". That is, it is determined that the text content that needs to be dispatched by the paragraph combination symbol is "Zan men chu qu jiao you ba (Let's go out for an outing)". The electronic device 100 further determines that the modification location of the paragraph combination symbol in the original text is near the right boundary of the character "," in the first text line. In this case, the electronic device 100 adds the text content "Zan men chu qu jiao you ba (Let's go out for an outing)" that needs to be dispatched by the paragraph combination symbol to a location near the left boundary of the character "," in the first text line. In addition, if there are other characters in the second text line, the other characters in the second text line are all moved forward by seven cells. If there is no other character in the second text line, the third and subsequent text lines (not shown in FIG. 11E) are all moved forward by one line. A modified text line is obtained, and the modified text line is "Jin tian de tian qi hen hao, zan men chu qu jiao you ba (Today's weather is very good, and let's go out for an outing)".

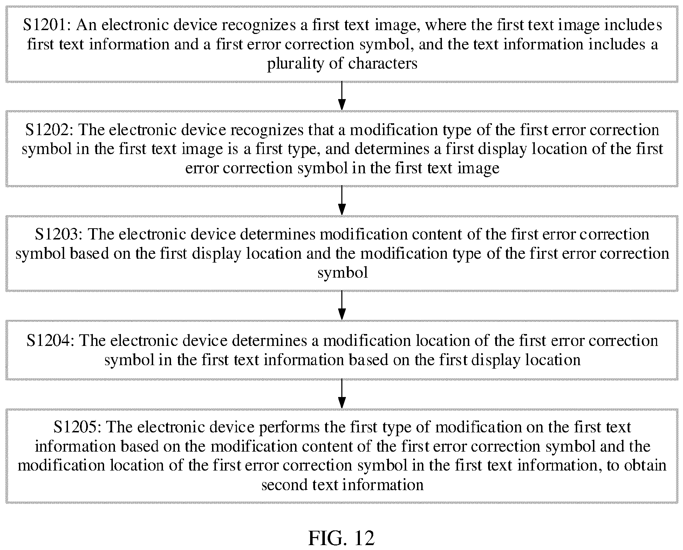

FIG. 12 is a schematic flowchart of a text recognition method according to an embodiment of this application.

S 1201: An electronic device recognizes a first text image, where the first text image includes first text information and a first error correction symbol, and the text information includes a plurality of characters.

S1202: The electronic device recognizes that a modification type of the first error correction symbol in the first text image is a first type, and determines a first display location of the first error correction symbol in the first text image.

The modification content of the first error correction symbol includes but is not limited to: adding content, deleting content, transposing content, and the like.

That the electronic device may be based on the first display location of the first error correction symbol in the first text image may be understood as a boundary of the first error correction symbol.

S1203: The electronic device determines modification content of the first error correction symbol based on the first display location and the modification type of the first error correction symbol.

In a possible implementation, that the electronic device determines modification content of the first error correction symbol based on the first display location and the modification type of the first error correction symbol specifically includes: The electronic device determines, based on the first display location and the modification type of the first error correction symbol, a first text line and a second text line in which the modification content of the first error correction symbol is located. That the electronic device performs the first type of modification on the first text information based on the modification content of the first error correction symbol and the modification location of the first error correction symbol in the first text information, to obtain second text information specifically includes: The electronic device aggregates the first text line and the second text line into a first text paragraph when it is determined that the first text line and the second text line belong to a same paragraph; and the electronic device performs the first type of modification on the first text information based on the first text paragraph and the modification location of the first error correction symbol in the first text information, to obtain the second text information.

In this way, the electronic device can aggregate different text lines belonging to a same paragraph into one paragraph, and modify the text. This improves accuracy of modifying the text based on the error correction symbol.

In a possible implementation, the first text line is above the second text line. That the electronic device aggregates the first text line and the second text line into a first text paragraph specifically includes: The electronic device splices the second text line at a tail of the first text line to obtain the first text paragraph. That is, the first text line and the second text line are aggregated into the first text paragraph, and the electronic device connects a header of the second text line to the tail of the first text line. Therefore, different text lines belonging to a same paragraph are aggregated into one paragraph.

In a possible implementation, the method further includes: When the first text line and the second text line do not belong to a same paragraph, the electronic device uses the first text line as the first text paragraph, and uses the second text line as a second text paragraph; and the electronic device performs the first type of modification on the first text information based on the first text paragraph, the second text paragraph, and the modification location of the first error correction symbol in the first text information, to obtain the second text information.

In this way, the electronic device can divide different text lines that do not belong to a same paragraph into different paragraphs, and modify the text based on the different paragraphs. This improves accuracy of modifying the text based on the error correction symbol.

In a possible implementation, before that the electronic device determines modification content of the first error correction symbol based on the first display location and the modification type of the first error correction symbol, the method further includes: The electronic device determines a second display location of each character in the first text information on the first text image. That the electronic device determines a modification location of the first error correction symbol in the first text information based on the first display location specifically includes: The electronic device determines the modification location of the first error correction symbol in the first text information based on the first display location and the second display location.

The second display location of each character in the first text information on the first text image may be understood as a boundary of each character in the first text information, for example, a left boundary of the character and a right boundary of the character. For how the electronic device recognizes the boundary of the character in the text, refer to the embodiments described in FIG. 8 and FIG. 9. Details are not described in this embodiment of this application again.

The electronic device determines the second display location of each character in the first text information on the first text image, to accurately determine the modification location of the first error correction symbol in the text. This improves accuracy of determining the modification location of the first error correction symbol in the first text information.

In another possible implementation, the electronic device may not recognize the boundary of each character in the first text information, and needs only to determine a boundary of each character in a specific region in which an image of the first error correction symbol is located. The specific region in which the image of the first error correction symbol is located may be the same as a region in which the image of the first error correction symbol is located, or may be larger than a region in which the image of the first error correction symbol is located. This is not limited in this embodiment of this application. In this way, the electronic device only needs to recognize boundaries of some characters in the first text information, and does not need to recognize a boundary of each character in the first text information, and does not need to recognize a boundary of a character that is in the first text information and that is irrelevant to the modification content and the modification location of the image of the first error correction symbol, thereby reducing a calculation amount of the electronic device.

In a possible implementation, that the electronic device determines a second display location of each character in the first text information on the first text image specifically include: The electronic device erases the first error correction symbol from the first text image, to obtain a second text image; the electronic device recognizes, from the second text image, a third display location of each character in the first text information on the second text image; and the electronic device determines, based on the third display location of each character in the first text information on the second text image, the second display location of each character in the first text information on the first text image.

In this way, the electronic device determines the boundary of each character in the first text information based on the text that does not include the error correction symbol, thereby avoiding the electronic device from recognizing the error correction symbol as a character, and thereby improving accuracy of character boundary recognition.

In a possible implementation, that the electronic device recognizes, from the second text image, a third display location of each character in the first text information on the second text image specifically includes: The electronic device recognizes a quantity of characters and character content in the second text image; and the electronic device recognizes the third display location of each character in the first text information on the second text image based on the quantity of characters and the character content in the second text image.

In this way, the quantity of characters in the text line is considered, the boundary of each character in the first text information is determined based on both the quantity of characters and the character content, thereby improving accuracy of character boundary recognition.

S 1204: The electronic device determines a modification location of the first error correction symbol in the first text information based on the first display location.

S1205: The electronic device performs the first type of modification on the first text information based on the modification content of the first error correction symbol and the modification location of the first error correction symbol in the first text information, to obtain second text information.

The type of the first error correction symbol is any one of the following: a deletion symbol, a restoration symbol, a transposition symbol, a correction symbol, an addition symbol, an emphasis symbol, a prompt symbol, a dispatch symbol, a c-paragraph symbol, a paragraph combination symbol, an indentation symbol, and a forward symbol.

In a possible implementation, when the first error correction symbol is any one of the addition symbol, the correction symbol, the c-paragraph symbol, the dispatch symbol, and the paragraph combination symbol, that the electronic device performs the first type of modification on the first text information based on the modification content of the first error correction symbol and the modification location of the first error correction symbol in the first text information, to obtain second text information specifically includes:
The electronic device adds first addition content at a first addition location based on the first addition content of the addition symbol and the first addition location of the addition symbol in the first text information, to obtain the second text information. For how the addition symbol modifies the text, refer to related descriptions in FIG. 11B.

Alternatively, the electronic device deletes first modification content from a first modification location based on first correction content and the first modification content of the correction symbol, and the first modification location of the correction symbol in the first text information, and displays the first modification content at the first modification location, to obtain the second text information. For how the correction symbol modifies the text, refer to related descriptions in FIG. 11A.

Alternatively, the electronic device adds first line break content at a first line break location based on the first line break content and the first line break location of the c-paragraph symbol in the first text information, to obtain the second text information, where the first line break content is determined based on the c-paragraph symbol. For how the c-paragraph symbol modifies the text, refer to related descriptions in FIG. 11D.

Alternatively, the electronic device adds first dispatch content at a first dispatch location based on the first dispatch content and the first dispatch location of the dispatch symbol in the first text information, to obtain the second text information, where the first dispatch content is determined based on the dispatch symbol. For how the dispatch symbol modifies the text, refer to related descriptions in FIG. 11C.

Alternatively, the electronic device adds first paragraph combination content at a first paragraph combination location based on the first paragraph combination content and the first paragraph combination location of the paragraph combination symbol in the first text information, and deletes a text line in which the first paragraph combination content is located, to obtain the second text information, where the first paragraph combination content is determined based on the paragraph combination symbol.

For how the paragraph combination symbol modifies the text, refer to related descriptions in FIG. 11E.

That is, for different types of error correction symbols, specific modification manners are different.

In a possible implementation, when the first error correction symbol is any one of the restoration symbol, the deletion symbol, the transposition symbol, the emphasis symbol, the prompt symbol, the indentation symbol, and the forward symbol, that the electronic device performs the first type of modification on the first text information based on the modification content of the first error correction symbol and the modification location of the first error correction symbol in the first text information, to obtain second text information specifically includes:
The electronic device adds first restoration content at a first restoration location based on the first restoration content and the first restoration location of the restoration symbol in the first text information, to obtain the second text information, where the first restoration content is determined based on the restoration symbol. For how the restoration symbol modifies the text, refer to related descriptions in FIG. 10B.

Alternatively, the electronic device deletes first deletion content from a first modification location based on the first deletion content and the first modification location of the deletion symbol in the first text information, to obtain the second text information, where the first deletion content is determined based on the deletion symbol. For how the deletion symbol modifies the text, refer to related descriptions in FIG. 10A.

Alternatively, the electronic device moves and displays second transposition content at a first transposition location and first transposition content at a second transposition location based on the first transposition content and the second transposition content of the transposition symbol, and the first transposition location and the second transposition location of the transposition symbol in the first text information, to obtain the second text information. For how the transposition symbol modifies the text, refer to related descriptions in FIG. 10C.

Alternatively, the electronic device highlights first highlighting content in a first manner based on the first highlighting content and a first display location of the emphasis symbol or the prompt symbol in the first text information, to obtain the second text information, where the first highlighting content is determined based on the emphasis symbol or the prompt symbol, and the first manner includes but is not limited to any one or more of the following: bold display, special color display, and shadow display.

For how the emphasis symbol or the prompt symbol modifies the text, refer to related descriptions in FIG. 10D and FIG. 10E.

Alternatively, the electronic device moves a third text line backward by two cells based on the third text line, a first indentation location of the indentation symbol in the first text information, and the first indentation location, to obtain the second text information, where the third text line is determined based on the indentation symbol. For how the indentation symbol modifies the text, refer to related descriptions in FIG. 10F.

Alternatively, the electronic device moves a fourth text line forward by two cells based on the fourth text line, a first forward location of the forward symbol in the first text information, and the first forward location, to obtain the second text information, where the fourth text line is determined based on the forward symbol.

For how the forward symbol modifies the text, refer to related descriptions in FIG. 10G.

That is, for different types of error correction symbols, specific modification manners are different.

This application provides an electronic device. The electronic device includes one or more processors and one or more memories. The one or more memories are coupled to the one or more processors, the one or more memories are configured to store computer program code, the computer program code includes computer instructions, and the one or more processors invoke the computer instructions to enable the electronic device to perform the text recognition method shown in FIG. 12.

This application provides a computer-readable storage medium. The computer-readable storage medium stores instructions, and when the instructions are run on an electronic device, the electronic device is enabled to perform the text recognition method shown in FIG. 12.

This application provides a computer program product. When the computer program product is executed by an electronic device, the electronic device is enabled to perform the text recognition method shown in FIG. 12.

The implementations of this application may be randomly combined to achieve different technical effect.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A text recognition method, wherein the method comprises:
recognizing, by an electronic device, a first text image, wherein the first text image comprises first text information and a first error correction symbol, and the text information comprises a plurality of characters;
recognizing, by the electronic device, that a modification type of the first error correction symbol in the first text image is a first type, and determining a first display location of the first error correction symbol in the first text image;
determining, by the electronic device, modification content of the first error correction symbol based on the first display location and the modification type of the first error correction symbol;
determining, by the electronic device, a modification location of the first error correction symbol in the first text information based on the first display location; and
performing, by the electronic device, the first type of modification on the first text information based on the modification content of the first error correction symbol and the modification location of the first error correction symbol in the first text information, to obtain second text information.

2. The method according to claim 1, wherein the determining, by the electronic device, modification content of the first error correction symbol based on the first display location and the modification type of the first error correction symbol specifically comprises:
determining, by the electronic device based on the first display location and the modification type of the first error correction symbol, a first text line and a second text line in which the modification content of the first error correction symbol is located; and
the performing, by the electronic device, the first type of modification on the first text information based on the modification content of the first error correction symbol and the modification location of the first error correction symbol in the first text information, to obtain second text information specifically comprises:
aggregating, by the electronic device, the first text line and the second text line into a first text paragraph when it is determined that the first text line and the second text line belong to a same paragraph; and
performing, by the electronic device, the first type of modification on the first text information based on the first text paragraph and the modification location of the first error correction symbol in the first text information, to obtain the second text information.

3. The method according to claim 2, wherein the first text line is above the second text line; and the aggregating, by the electronic device, the first text line and the second text line into a first text paragraph specifically comprises:
splicing, by the electronic device, the second text line at a tail of the first text line to obtain the first text paragraph.

4. The method according to claim 2 or 3, wherein the method further comprises:
when the first text line and the second text line do not belong to a same paragraph, using, by the electronic device, the first text line as the first text paragraph, and using the second text line as a second text paragraph; and
performing, by the electronic device, the first type of modification on the first text information based on the first text paragraph, the second text paragraph, and the modification location of the first error correction symbol in the first text information, to obtain the second text information.

5. The method according to any one of claims 1 to 4, wherein the type of the first error correction symbol is any one of the following: a deletion symbol, a restoration symbol, a transposition symbol, a correction symbol, an addition symbol, an emphasis symbol, a prompt symbol, a dispatch symbol, a c-paragraph symbol, a paragraph combination symbol, an indentation symbol, and a forward symbol.

6. The method according to any one of claims 1 to 5, wherein before the determining, by the electronic device, modification content of the first error correction symbol based on the first display location and the modification type of the first error correction symbol, the method further comprises:
determining, by the electronic device, a second display location of each character in the first text information on the first text image; and
the determining, by the electronic device, a modification location of the first error correction symbol in the first text information based on the first display location specifically comprises:
determining, by the electronic device, the modification location of the first error correction symbol in the first text information based on the first display location and the second display location.

7. The method according to claim 6, wherein the determining, by the electronic device, a second display location of each character in the first text information on the first text image specifically comprises:
erasing, by the electronic device, the first error correction symbol from the first text image, to obtain a second text image;
recognizing, by the electronic device from the second text image, a third display location of each character in the first text information on the second text image; and
determining, by the electronic device based on the third display location of each character in the first text information on the second text image, the second display location of each character in the first text information on the first text image.

8. The method according to claim 7, wherein the recognizing, by the electronic device from the second text image, a third display location of each character in the first text information on the second text image specifically comprises:
recognizing, by the electronic device, a quantity of characters and character content in the second text image; and
recognizing, by the electronic device, the third display location of each character in the first text information on the second text image based on the quantity of characters and the character content in the second text image.

9. The method according to any one of claims 1 to 8, wherein when the first error correction symbol is any one of the addition symbol, the correction symbol, the c-paragraph symbol, the dispatch symbol, and the paragraph combination symbol, the performing, by the electronic device, the first type of modification on the first text information based on the modification content of the first error correction symbol and the modification location of the first error correction symbol in the first text information, to obtain second text information specifically comprises:
adding, by the electronic device, first addition content at a first addition location based on the first addition content of the addition symbol and the first addition location of the addition symbol in the first text information, to obtain the second text information;
deleting, by the electronic device, first modification content from a first modification location based on first correction content and the first modification content of the correction symbol, and the first modification location of the correction symbol in the first text information, and displaying the first correction content at the first modification location, to obtain the second text information;
adding, by the electronic device, first line break content at a first line break location based on the first line break content and the first line break location of the c-paragraph symbol in the first text information, to obtain the second text information, wherein the first line break content is determined based on the c-paragraph symbol;
adding, by the electronic device, first dispatch content at a first dispatch location based on the first dispatch content and the first dispatch location of the dispatch symbol in the first text information, to obtain the second text information, wherein the first dispatch content is determined based on the dispatch symbol; or
adding, by the electronic device, first paragraph combination content at a first paragraph combination location based on the first paragraph combination content and the first paragraph combination location of the paragraph combination symbol in the first text information, and deleting a text line in which the first paragraph combination content is located, to obtain the second text information, wherein the first paragraph combination content is determined based on the paragraph combination symbol.

10. The method according to any one of claims 1 to 8, wherein when the first error correction symbol is any one of the restoration symbol, the deletion symbol, the transposition symbol, the emphasis symbol, the prompt symbol, the indentation symbol, and the forward symbol, the performing, by the electronic device, the first type of modification on the first text information based on the modification content of the first error correction symbol and the modification location of the first error correction symbol in the first text information, to obtain second text information specifically comprises:
adding, by the electronic device, first restoration content at a first restoration location based on the first restoration content and the first restoration location of the restoration symbol in the first text information, to obtain the second text information, wherein the first restoration content is determined based on the restoration symbol;
deleting, by the electronic device, first deletion content from a first modification location based on the first deletion content and the first modification location of the deletion symbol in the first text information, to obtain the second text information, wherein the first deletion content is determined based on the deletion symbol;
moving and displaying, by the electronic device, second transposition content at a first transposition location and first transposition content at a second transposition location based on the first transposition content and the second transposition content of the transposition symbol, and the first transposition location and the second transposition location of the transposition symbol in the first text information, to obtain the second text information;
highlighting, by the electronic device, first highlighting content in a first manner based on the first highlighting content and a first display location of the emphasis symbol or the prompt symbol in the first text information, to obtain the second text information, wherein the first highlighting content is determined based on the emphasis symbol or the prompt symbol, and the first manner comprises but is not limited to any one or more of the following: bold display, special color display, and shadow display;
moving, by the electronic device, each character in a third text line backward by two cells based on the third text line, and a first indentation location of the indentation symbol in the first text information, to obtain the second text information, wherein the third text line is determined based on the indentation symbol; or
moving, by the electronic device, each character in a fourth text line forward by two cells based on the fourth text line, and a first forward location of the forward symbol in the first text information, and the first forward location, to obtain the second text information, wherein the fourth text line is determined based on the forward symbol.

11. An electronic device, wherein the electronic device comprises one or more processors and one or more memories, the one or more memories are coupled to the one or more processors, the one or more memories are configured to store computer program code, the computer program code comprises computer instructions, and the one or more processors invoke the computer instructions to enable the electronic device to perform the method according to any one of claims 1 to 10.

12. A computer-readable storage medium, wherein the computer-readable storage medium stores instructions, and when the instructions are run on an electronic device, the electronic device is enabled to perform the method according to any one of claims 1 to 10.

13. A computer program product, wherein when the computer program product is executed by an electronic device, the electronic device is enabled to perform the method according to any one of claims 1 to 10.
